# EUROPEAN PATENT APPLICATION

(11) **EP 4 550 932 A1**
(43) Date of publication of application: **07.05.2025**
(21) Application number: 23903906.8
(22) Date of filing: 08.12.2023
(51) Int. Cl.: H05B 6/06, H05B 6/12, H02J 50/80, H02J 50/10

(54) **WIRELESS POWER TRANSMISSION DEVICE AND CONTROL METHOD THEREOF**

(30) Priority: 12.12.2022 KR 20220173052
(71) Applicant: Samsung Electronics Co., Ltd., Suwon-si, Gyeonggi-do 16677 (KR)
(72) Inventor: KIM, Jaejin, Suwon-si, Gyeonggi-do 16677 (KR); KIM, Dongwook, Suwon-si, Gyeonggi-do 16677 (KR); CHOI, Jiwoong, Suwon-si, Gyeonggi-do 16677 (KR); KANG, Heejun, Suwon-si, Gyeonggi-do 16677 (KR); PARK, Namju, Suwon-si, Gyeonggi-do 16677 (KR)
(74) Representative: Walaski, Jan Filip
(86) International application number: PCT/KR2023/020242
(87) International publication number: WO 2024/128703

(57) **Abstract**

A wireless power transmission device is provided. The wireless power transmission device includes a wireless power transmitter, a communication interface, memory storing one or more programs including instructions and transmission frequency information for each of a plurality of cooking appliances including a load, and one or more processors, wherein instructions, when executed by the one or more processors, , cause the wireless power transmission device to control the communication interface to receive identification information related to a type of the cooking appliance, determine a limited frequency corresponding to the identification information, based on the transmission frequency information, and set an operation frequency range of first power being transmitted to the cooking appliance in a low-load state in which an operation of a main load of the cooking appliance is stopped, based on the limited frequency.

## Description

### [Technical Field]

The disclosure relates to a wireless power transmission device and a control method of the same.

### [Background Art]

A wireless power transmission device is a heating appliance for cooking by using the principle of induction heating and is referred to as an induction range or an induction stove. The wireless power transmission device induces generation of heat by transferring power to an object-to-be heated such as a cooking appliance, thereby having high energy efficiency and stability. As heat is generated in the object-to-be heated but a contact surface of the wireless power transmission device is not heated, the wireless power transmission device may reduce the risk of burns. As the wireless power transmission device does not consume oxygen or discharge waste gas, compared to a gas stove, the wireless power transmission device may decrease air pollution and lessen an indoor temperature increase. Accordingly, there is an increasing demand for wireless power transmission devices.

When the wireless power transmission device does not transmit power to a cooking appliance, regardless of a load of the cooking appliance, an amount of power not transmitted to the cooking appliance but lost increases, and thus, efficiency of power transmission may decrease. In particular, when power is transmitted without limit in frequencies in a low-load state in which an operation of a main load of the cooking appliance is stopped, a device included in a load of the cooking appliance may be damaged. It may not be easy for an existing wireless power transmission device or cooking device to adjust frequencies of transmission power, in correspondence to a normal state or a low-load state.

### [Disclosure]

### [Technical Solution]

In accordance with an aspect of the disclosure, a wireless power transmission device is provided. The wireless power transmission device includes a wireless power transmitter configured to wirelessly transmit power to a cooking appliance, a communication interface configured to establish a wireless communication connection to the cooking appliance, memory storing one or more programs including instructions and transmission frequency information for each of a plurality of cooking appliances including a load, and one or more processors, wherein the instructions, when executed by the one or more processors, may cause the wireless power transmission device to receive identification information related to a type of the cooking appliance, determine a limited frequency corresponding to the identification information, based on the transmission frequency information, and set an operation frequency range of first power being transmitted to the cooking appliance in a low-load state in which an operation of a main load of the cooking appliance is stopped, based on the limited frequency.

In accordance with another aspect of the disclosure, a control method of a wireless power transmission device is provided. The control method includes receiving identification information related to a type of a cooking appliance, determining a limited frequency corresponding to the identification information, based on transmission frequency information stored in memory of the wireless power transmission device, and setting an operation frequency range of first power being transmitted to the cooking appliance in a low-load state in which an operation of a main load of the cooking appliance is stopped, based on the limited frequency.

In accordance with another aspect of the disclosure, a cooking appliance is provided. The cooking appliance includes a receiving coil configured to wirelessly receive power from a wireless power transmission device, a communication interface configured to establish a wireless communication connection to the wireless power transmission device, memory storing one or more programs including instructions and reception frequency information for each of a plurality of wireless power transmission devices, and a controller including one or more processors and electrically connected to the communication interface and the memory, wherein the instructions, when executed by the one or more processors, cause the cooking appliance to control the communication interface to receive source identification information of the wireless power transmission device from the wireless power transmission device, determine a limited frequency corresponding to the source identification information, based on the reception frequency information, and control the communication interface to transmit the limited frequency to the wireless power transmission device.

### [Description of Drawings]

FIG. 1 is a diagram illustrating a system including a wireless power transmission device and a cooking appliance, according to an embodiment of the disclosure;
FIG. 2 is a block diagram illustrating a wireless power transmission device according to an embodiment of the disclosure;
FIG. 3 is a block diagram illustrating a wireless power transmission device according to an embodiment of the disclosure;
FIG. 4 is a diagram illustrating a cooking appliance according to an embodiment of the disclosure;
FIG. 5 is a diagram illustrating a cooking appliance according to an embodiment of the disclosure;
FIG. 6 is a diagram illustrating a cooking appliance according to an embodiment of the disclosure;
FIG. 7 is a diagram illustrating a power transmission/reception structure between a wireless power transmission device and an induction heating (IH) load device, according to an embodiment of the disclosure;
FIG. 8 is a diagram illustrating a power transmission/reception structure between a wireless power transmission device and an induced voltage load device, according to an embodiment of the disclosure;
FIG. 9 is a flowchart illustrating a control method of a wireless power transmission device, according to an embodiment of the disclosure;
FIG. 10 is a flowchart illustrating a method by which a wireless power transmission device receives identification information, according to an embodiment of the disclosure;
FIG. 11 is a flowchart illustrating a method by which a wireless power transmission device transmits power, according to an embodiment of the disclosure;
FIG. 12 is a flowchart illustrating a method by which a wireless power transmission device transmits power, according to an embodiment of the disclosure;
FIG. 13 is a flowchart illustrating a method by which a wireless power transmission device transmits power, according to an embodiment of the disclosure;
FIG. 14 is a graph showing an output gain according to a frequency of first power transmitted from a wireless power transmission device, according to an embodiment of the disclosure;
FIG. 15 is a table of frequencies of first power being transmitted from a wireless power transmission device according to types of a wireless power reception device, according to an embodiment of the disclosure;
FIG. 16 is a table showing transmission frequency information according to an embodiment of the disclosure;
FIG. 17 is a table showing transmission frequency information according to an embodiment of the disclosure;
FIG. 18 is a flowchart illustrating a method of controlling a cooking appliance, according to an embodiment of the disclosure;
FIG. 19 is a flowchart illustrating a method by which a cooking appliance transmits a limited frequency, according to an embodiment of the disclosure;
FIG. 20 is a flowchart illustrating a method by which a cooking appliance transmits a limited frequency, according to an embodiment of the disclosure;
FIG. 21 is a table showing reception frequency information according to an embodiment of the disclosure;
FIG. 22 is a diagram illustrating a wireless power transmission device according to an embodiment of the disclosure;
FIG. 23 is a diagram illustrating a cooking appliance according to an embodiment of the disclosure;
FIG. 24 is a diagram illustrating a cooking appliance according to an embodiment of the disclosure; and
FIG. 25 is a diagram illustrating a cooking appliance according to an embodiment of the disclosure.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the disclosure, the expression "at least one of a, b, or c" indicates only a, only b, only c, both a and b, both a and c, both b and c, all of a, b, and c, or variations thereof.

When a part "includes" or "comprises" an element, unless there is a particular description contrary thereto, the part may further include other elements, not excluding the other elements. Also, the terms such as "... unit," "module," or the like used in the disclosure indicate a unit, which processes at least one function or operation, and the unit may be implemented by hardware or software, or by a combination of hardware and software.

Hereinafter, an embodiment of the disclosure will now be described more fully with reference to the accompanying drawings for one of ordinary skill in the art to be able to perform the disclosure without any difficulty. However, an embodiment of the disclosure may be embodied in many different forms and should not be construed as being limited to the embodiment set forth herein. In addition, portions irrelevant to the description will be omitted in the drawings for a clear description of an embodiment of the disclosure, and like reference numerals will denote like elements throughout the disclosure.

A wireless power transmission device according to the disclosure intends to prevent a damage to a device included in a load of a cooking appliance by setting an operation frequency range, based on a limited frequency, in a low-load state in which an operation of a main load of the cooking appliance is stopped.

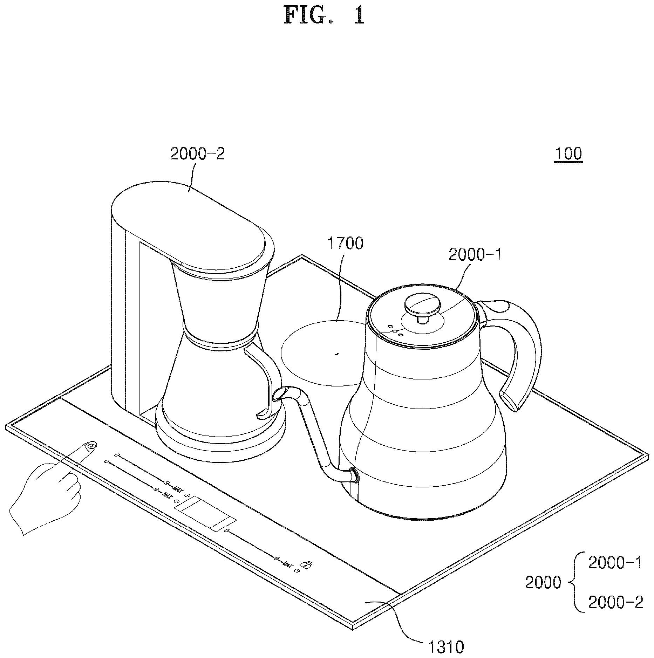

FIG. 1 is a diagram illustrating a system including a wireless power transmission device and a cooking appliance, according to an embodiment of the disclosure.

Referring to FIG. 1, a system 100 according to an embodiment of the disclosure may include a wireless power transmission device 1000 and a cooking appliance 2000. However, not all elements shown in FIG. 1 are necessary elements. The system 100 may be implemented with more elements than the elements shown in FIG. 1 or may be implemented with fewer elements than the shown elements. For example, the system 100 may be implemented with the wireless power transmission device 1000, the cooking appliance 2000, and a server apparatus (not shown). Hereinafter, each configuration of the system 100 will now be described.

The wireless power transmission device 1000 according to an embodiment of the disclosure may be a device configured to wirelessly transmit power to the cooking appliance 2000 located on a top plate, by using electromagnetic induction. The wireless power transmission device 1000 may be referred to as an induction heating device, an induction range, a cooktop, or an electric range. For example, the wireless power transmission device 1000 may be a heating appliance for cooking which is commonly referred to as an induction range or an induction, which uses the principle of induction heating. The wireless power transmission device 1000 may include a working coil configured to generate a magnetic field for induction-heating the cooking appliance 2000. The working coil may be referred to as a transmitting coil.

In order to wirelessly transmit power, the wireless power transmission device 1000 may transfer the power by using a magnetic field induced in a receiving coil or an induction heating (IH) metal (e.g., iron component) by using a magnetic induction method. For example, the wireless power transmission device 1000 may flow a current in the working coil to generate a magnetic field such that an eddy current may be generated in the cooking appliance 2000 or a magnetic field may be induced in the receiving coil of the cooking appliance 2000.

According to an embodiment of the disclosure, the wireless power transmission device 1000 may include a plurality of working coils. For example, when a top plate of the wireless power transmission device 1000 includes a plurality of cooking zones 1700 (also referred to as fuel intakes), the wireless power transmission device 1000 may include a plurality of working coils respectively corresponding to the plurality of cooking zones 1700. Also, the wireless power transmission device 1000 may include a high-power cooking zone 1700 in which a first working coil is arranged on the inner side thereof and a second working coil is arranged on the outer side thereof. The high-power cooking zone 1700 may include three or more working coils.

The top plate of the wireless power transmission device 1000 according to an embodiment of the disclosure may include tempered glass such as ceramic glass so as not to be easily damaged. Also, a guide mark for guiding the cooking zone 1700 in which the cooking appliance 2000 should be located may be provided on the top plate of the wireless power transmission device 1000.

The wireless power transmission device 1000 according to an embodiment of the disclosure may detect that the cooking appliance 2000 (e.g., a general IH container, an IH cooking appliance) including a magnetic material is placed on the top plate. For example, the wireless power transmission device 1000 may detect that the cooking appliance 2000 is located on the top plate of the wireless power transmission device 1000, based on a change in a current value (an inductance) of the working coil due to an approach of the cooking appliance 2000. Hereinafter, a mode in which the wireless power transmission device 1000 detects the cooking appliance 2000 including the magnetic material (IH metal) is defined as an "IH container detection mode (pan detection mode)".

According to an embodiment of the disclosure, the wireless power transmission device 1000 may include a communication interface configured to perform communication with an external device. For example, the wireless power transmission device 1000 may perform communication with the cooking appliance 2000 or the server apparatus via the communication interface. The communication interface may include a short-range wireless communication interface (e.g., a near-field communication (NFC) communication interface, a Bluetooth communication interface, a Bluetooth low energy (BLE) communication interface, etc.), and a long-range wireless communication interface. The wireless power transmission device 1000 may be connected to the cooking appliance 2000, a mobile terminal, or the server apparatus via a network. The network may include a wide area network (WAN) including Internet, a local area network (LAN) established around an access point (AP), and a wireless personal area network (WPAN) without connection to the AP. The WPAN may include, but is not limited to, Bluetooth^{™}, Institute of Electrical and Electronics Engineers (IEEE) 802.15.1, Zigbee, IEEE 802.15.4, Wi-Fi Direct, NFC, Z-Wave, etc.

According to an embodiment of the disclosure, the wireless power transmission device 1000 may detect For example, the wireless power transmission device 1000 may detect the cooking appliance 2000 by receiving a packet transmitted from the cooking appliance 2000 located on the top plate, by using short-range wireless communication (e.g., BLE, Bluetooth, etc.). The cooking appliance 2000 including a communication interface may defined as a small appliance, and thus, hereinafter, a mode in which the wireless power transmission device 1000 detects the cooking appliance 2000 via the communication interface is defined as a "small appliance detection mode". In the small appliance detection mode, the wireless power transmission device 1000 may transmit, via the plurality of cooking zones 1700, power for activating the communication interface of the cooking appliance 2000.

According to an embodiment of the disclosure, in the small appliance detection mode, the wireless power transmission device 1000 may receive unique identification information (e.g., a medium access control (MAC) address) and variable identification information of the cooking appliance 2000 from the cooking appliance 2000 via the short-range wireless communication (e.g., a BLE communication, a Bluetooth communication, etc.). In this regard, when information indicating that a current location is not identifiable is included in the variable identification information of the cooking appliance 2000, the wireless power transmission device 1000 outputs power according to a different power transmission pattern for each the cooking zone 1700, thereby allowing the cooking appliance 2000 to recognize its current location. Hereinafter, a mode in which the wireless power transmission device 1000 outputs power according to a different power transmission pattern for each the cooking zone 1700 may be defined as a 'cooking zone determination mode'. When the wireless power transmission device 1000 operates in the cooking zone determination mode, the wireless power transmission device 1000 may receive the variable identification information including information about a first cooking zone corresponding to a first power transmission pattern detected by the cooking appliance 2000 and type information (e.g., a product type image, a product type text) of the cooking appliance 2000. Here, the first cooking zone may be a cooking zone on which the cooking appliance 2000 is located from among the plurality of cooking zones 1700 included in the wireless power transmission device 1000. The type information of the cooking appliance 2000 may be information indicating a product type of the cooking appliance 2000, and the product type may include, but is not limited to, a smart pot, a smart kettle, a coffee maker, a toaster, a blender, or the like.

When the wireless power transmission device 1000 receives the variable identification information including location information of the cooking appliance 2000 and the type information of the cooking appliance 2000, the wireless power transmission device 1000 may display, on a display unit of an output interface 1310, the location information of the cooking appliance 2000 and the type information of the cooking appliance 2000, based on the variable identification information. For example, the wireless power transmission device 1000 displays, on the display unit of an output interface 1310, an icon indicating the cooking appliance 2000 at a location corresponding to the cooking zone 1700, thereby providing the type information (e.g., a kettle) of the cooking appliance 2000 and the location information (e.g., located in the cooking zone 1700 in the right) of the cooking appliance 2000 to a user. The user may identify the type and the location of the cooking appliance 2000 via the display unit of an output interface 1310, and may perform a manipulation of inputting an operation to be performed by the wireless power transmission device 1000. For example, the user may input a heating request for the wireless power transmission device 1000 to heat content in the cooking appliance 2000. The wireless power transmission device 1000 may wirelessly providing power corresponding to the heating operation to the cooking appliance 2000, thereby heating the content in the cooking appliance 2000.

The cooking appliance 2000 may be a device configured to heat content. The content may be, but is not limited to, liquid items including water, tea, coffee, soup, juice, wine, oil, or the like, or solid items including buffer, meat, vegetables, bread, rice, or the like.

According to an embodiment of the disclosure, the cooking appliance 2000 may wirelessly receive power from the wireless power transmission device 1000 by using electromagnetic induction. Therefore, the cooking appliance 2000 according to an embodiment of the disclosure may not include a power cable to be connected to a power outlet.

According to an embodiment of the disclosure, the cooking appliance 2000 configured to wirelessly receive power from the wireless power transmission device 1000 may vary. The cooking appliance 2000 may be a general IH container including a magnetic material (hereinafter, a general IH container), or may be the cooking appliance 2000 including the communication interface. Hereinafter, the cooking appliance 2000 including the communication interface may be defined as a small appliance. According to an embodiment of the disclosure, the cooking appliance 2000 may include an IH load device 2000-1 including a magnetic material (IH metal) (e.g., iron component) and an induced voltage load device 2000-2 including a receiving coil. In the IH load device 2000-1, a magnetic field may be induced in the container (IH metal) itself. In the induced voltage load device 2000-2, a magnetic field may be induced in the receiving coil.

The cooking appliance 2000 may include a general IH container, such as a pot, a frying pan, and a steamer, or may include a small appliance, such as an electric kettle, a teapot, a coffee machine (or a coffee dripper), a toaster, a blender, an electric rice cooker, an oven, and an air fryer, but is not limited thereto. The cooking appliance 2000 may include a cooker apparatus. The cooker apparatus may be an apparatus into or from which a general IH container may be inserted or detached. According to an embodiment of the disclosure, the cooker apparatus may be an apparatus capable of automatically cooking contents according to a recipe. The cooker apparatus may also be referred to as a pot, a rice cooker, or a steamer depending on an intended use thereof. For example, when an inner pot capable of cooking rice is inserted into the cooker apparatus, the cooker apparatus may be referred to as a rice cooker. Hereinafter, the cooker apparatus may be defined as a smart pot.

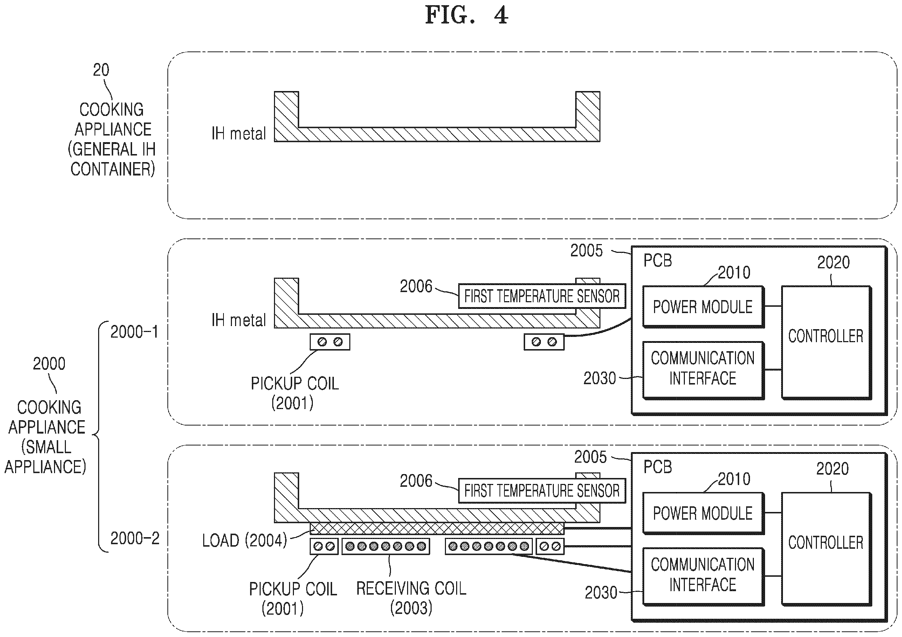

A type of the cooking appliance 2000 will be further described in detail with reference to FIGS. 4, 5, and 23 to 25.

According to an embodiment of the disclosure, the cooking appliance 2000 may perform communication with the wireless power transmission device 1000 via the communication interface. The communication interface may include the short-range wireless communication interface, the long-range wireless communication interface, or the like. The cooking appliance 2000 may be connected to the wireless power transmission device 1000, a mobile terminal, or the server apparatus via a network.

The AP may connect a LAN, in which the wireless power transmission device 1000, the cooking appliance 2000, or the mobile terminal is connected, to a WAN to which the server apparatus is connected. The wireless power transmission device 1000, the cooking appliance 2000, or the mobile terminal may be connected to the server apparatus via the WAN. The AP may communicate with wireless power transmission device 1000, the cooking appliance 2000, or the mobile terminal by using a wireless communication such as Wi-Fi^{™}, IEEE 802.11, etc., and may access the WAN by using a wired communication.

The cooking appliance 2000 according to an embodiment of the disclosure may transmit the unique identification information and variable identification information of the cooking appliance 2000 to the wireless power transmission device 1000 via the communication interface. The unique identification information of the cooking appliance 2000 is unique information for identifying the cooking appliance 2000, and may include, but is not limited to, at least one of a MAC address, a model name, device type information (e.g., IH type identification (ID), heater type ID, motor type ID, or small appliance type ID), manufacturer information (e.g., manufacturer ID), a serial number, or manufacture time information (date of production). According to an embodiment of the disclosure, the unique identification information of the cooking appliance 2000 may be expressed as a series of ID numbers or a combination of numbers and alphabet letters. The variable identification information of the cooking appliance 2000 may be information changing according to a state of the cooking appliance 2000, and may include, but is not limited to, information indicating a registration state of the cooking appliance 2000, location information of the cooking appliance 2000, type information of the cooking appliance 2000, or the like. The location information of the cooking appliance 2000 may include information about the cooking zone 1700 in which the cooking appliance 2000 is located. According to an embodiment of the disclosure, the variable identification information of the cooking appliance 2000 may be expressed as a series of ID numbers or a combination of numbers and alphabet letters. The variable identification information of the cooking appliance 2000 may be included in the form of universally unique identifier (UUID) in an advertising packet.

According to an embodiment of the disclosure, the cooking appliance 2000 may store recipe information for cooking content. The recipe information may vary according to a type of the cooking appliance 2000, and may include a plurality of recipe lists. For example, when the cooking appliance 2000 is a coffee machine, the recipe information may include a coffee bean recipe list, when the cooking appliance 2000 is a smart pot, the recipe information may include a food recipe list, and when the cooking appliance 2000 is a blender, the recipe information may include a beverage recipe list.

According to an embodiment of the disclosure, a limited frequency of power transmitted from the wireless power transmission device 1000 to the cooking appliance 2000 may be set based on identification information of the cooking appliance 2000 which is related to a type of the cooking appliance 2000, and an operation frequency range for power transmission from the wireless power transmission device 1000 to the cooking appliance 2000 may be set based on the set limited frequency. For example, the wireless power transmission device 1000 may set a limited frequency, based on the identification information received the cooking appliance 2000, and may set an operation frequency range, based on the set limited frequency. For example, the cooking appliance 2000 may set the limited frequency, based on source identification information received from the wireless power transmission device 1000, and may transmit the set limited frequency to the wireless power transmission device 1000 so as to allow the wireless power transmission device 1000 to set the operation frequency range.

According to an embodiment of the disclosure, a load of the cooking appliance 2000 may have a normal load state that is an operational state in which power is received from the wireless power transmission device 1000, and a low load state in which the load of the cooking appliance 2000 stops operating and thus power supply to the load of the cooking appliance 2000 is unnecessary. When the load of the cooking appliance 2000 is in the low load state, a minimum value of the operation frequency range may be set as the limited frequency, and then the wireless power transmission device 1000 may transmit power at the limited frequency to the cooking appliance 2000. In the low load state, power supply to the load of the cooking appliance 2000 is unnecessary, and thus, when power is supplied without a limit in frequencies, power may be lost while the wireless power transmission device 1000 transmits power to the cooking appliance 2000. In the low load state, only when power is transmitted at a limited frequency, an amount of power being lost while power is transmitted from the wireless power transmission device 1000 to the cooking appliance 2000 may be decreased.

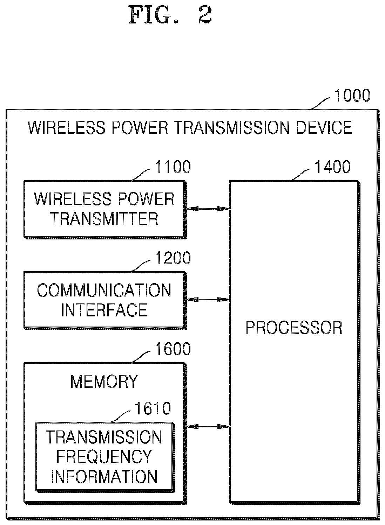

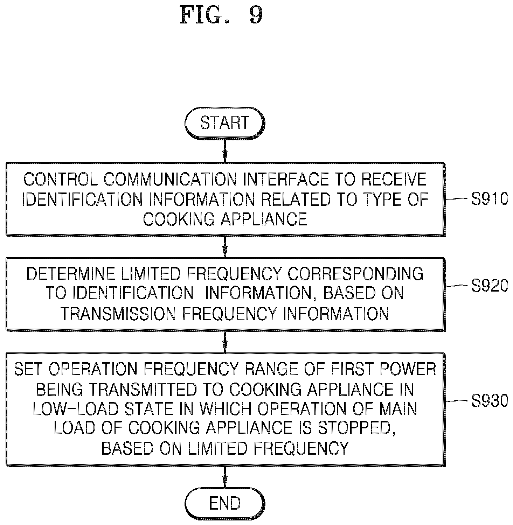

An operation in which a wireless power transmission device sets an operation frequency range of power being transmitted to a cooking appliance will be described in detail with reference to FIG. 9, and hereinafter, elements configuring the wireless power transmission device 1000 will now be described with reference to FIG. 2.

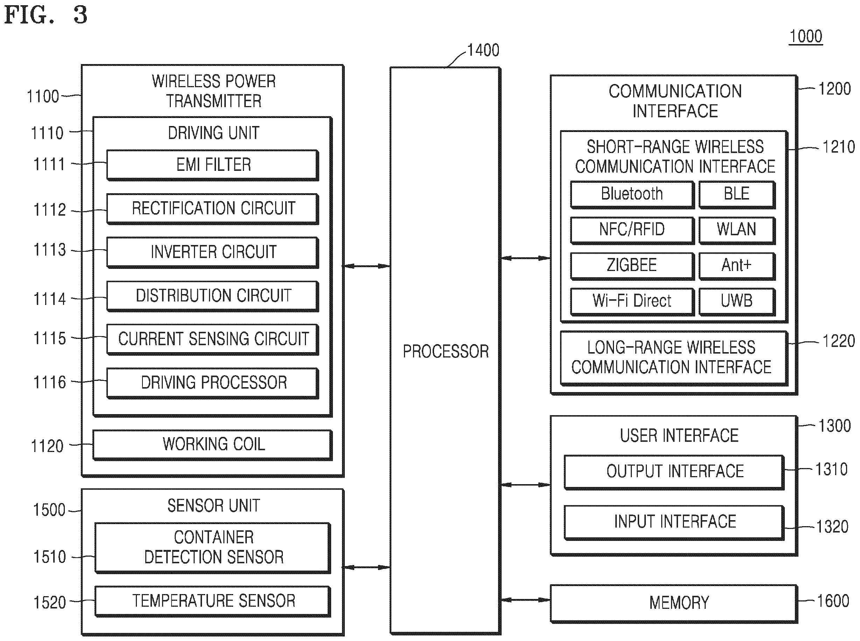

FIG. 2 is a block diagram illustrating the wireless power transmission device 1000 according to an embodiment of the disclosure. The wireless power transmission device 1000 according to an embodiment of the disclosure may include a wireless power transmitter 1100, a communication interface 1200, memory 1600, and a processor 1400. However, the wireless power transmission device 1000 may be implemented with more elements than the elements shown in FIG. 2. Hereinafter, the elements shown in FIG. 2 will be sequentially described, and then other elements will be described with reference to FIG. 3.

The wireless power transmitter 1100 according to an embodiment of the disclosure may include a circuit or a means capable of wirelessly transmitting power. For example, the wireless power transmitter 1100 may include a working coil 1120. The wireless power transmitter 1100 may receive power from an external source. The wireless power transmitter 1100 may supply a current to the working coil, in response to a driving control signal of the processor 1400.

The wireless power transmitter 1100 according to an embodiment of the disclosure may wirelessly supply power to the cooking appliance 2000 located in the cooking zone 1700. For example, the wireless power transmitter 1100 may wirelessly supply power to the cooking appliance 2000 located in the cooking zone 1700, by using the working coil 1120. The wireless power transmitter 1100 may generate a magnetic field for heating the cooking appliance 2000. For example, when a driving current is supplied to the working coil 1120 of the wireless power transmitter 1100, a magnetic field may be induced around the working coil 1120. When an alternating current that is a current whose amplitude and direction change over time is supplied to the working coil 1120, a magnetic field whose magnitude and direction change over time may be induced around the working coil 1120. The magnetic field around the working coil 1120 may pass through the top plate consisting of a reinforced glass. The magnetic field around the working coil 1120 may reach the cooking appliance 2000 placed on the top plate of the wireless power transmission device 1000. Due to the magnetic field whose magnitude and direction change over time, an eddy current rotating around the magnetic field may be generated in the cooking appliance 2000. Due to the eddy current generated in the cooking appliance 2000, electrical resistance heat may be generated. The electrical resistance heat is heat generated in a resistor when a current flows therein, and is also referred to as Joule heat. The cooking appliance 2000 may be heated by the electrical resistance heat, and accordingly, content in the cooking appliance 2000 may be heated. When the cooking appliance 2000 is the induced voltage load device 2000-2 including the receiving coil, a magnetic field around the working coil 1120 may be induced in the reception coil of the cooking appliance 2000.

The communication interface 1200 according to an embodiment of the disclosure may establish a wireless communication connection to the cooking appliance 2000. The communication interface 1200 may include one or more elements for establishing a wireless communication connection to the cooking appliance 2000.

The memory 1600 according to an embodiment of the disclosure may store transmission frequency information 1610. The transmission frequency information 1610 may include a frequency value of power transmitted from the wireless power transmitter 1100. The transmission frequency information 1610 may include frequency values respectively corresponding to a plurality of cooking appliances each including a load.

The processor 1400 may control an overall operation of the wireless power transmission device 1000. The processor 1400 may control the wireless power transmitter 1100 and the communication interface 1200 by executing programs stored in the memory 1600.

The processor 1400 according to an embodiment of the disclosure may control the communication interface 1200 to receive identification information related to a type of the cooking appliance 2000. The identification information may include a product name of the cooking appliance 2000, a model type of the cooking appliance 2000, and code information indicating a type of a load of the cooking appliance 2000. The identification information may include information indicating whether the cooking appliance 2000 is the IH load device 2000-1 or the induced voltage load device 2000-2.

The processor 1400 according to an embodiment of the disclosure may determine a limited frequency corresponding to the identification information, based on the transmission frequency information 1610. The processor 1400 may load the transmission frequency information 1610. The transmission frequency information 1610 may include limited frequency values for each cooking appliance 2000. The processor 1400 may identify a limited frequency value of the cooking appliance 2000 which corresponds to the received identification information. The processor 1400 may determine the identified limited frequency value as a limited frequency.

The processor 1400 according to an embodiment of the disclosure may set, based on the limited frequency, an operation frequency range of first power being transmitted to the cooking appliance 2000 when the cooking appliance 2000 is in a low load state in which an operation of a main load of the cooking appliance 2000 is stopped.

In an embodiment of the disclosure, the main load may be a load related to heating, cooking, and driving operations of the cooking appliance 2000. A state in which the main load operates may be referred to as a normal operation state, and a state in which an operation of the main load is stopped may be referred to as a low load state. The cooking appliance 2000 may receive power via the main load in the normal operation state. The cooking appliance 2000 may receive power via the communication interface 1200 in the low load state. In the low load state, the cooking appliance 2000 may stop heating, cooking, and driving operations of the cooking appliance 2000, and may communicate with the wireless power transmission device 1000 via the communication interface 1200. In the low load state, receiving of power at a frequency different from that of the normal operation state may improve power reception efficiency of the cooking appliance 2000.

In an embodiment of the disclosure, when it is the low load state, the processor 1400 may set the operation frequency range of first power being transmitted to the cooking appliance 2000 to be equal to or greater than the limited frequency. The processor 1400 may set a minimum value of the operation frequency range of first power being transmitted to the cooking appliance 2000 to be the limited frequency. The processor 1400 may control the wireless power transmitter 1100 to allow a frequency value of first power being transmitted to the cooking appliance 2000 to have a value greater than the limited frequency. The processor 1400 may set a minimum value of an operation frequency range to be a limited frequency, thereby improving power reception efficiency of the cooking appliance 2000 in the low load state.

Hereinafter, detailed elements configuring the wireless power transmission device 1000 will now be described with reference to FIG. 3.

FIG. 3 is a block diagram illustrating the wireless power transmission device 1000 according to an embodiment of the disclosure. The wireless power transmission device 1000 according to an embodiment of the disclosure may include the wireless power transmitter 1100, the communication interface 1200, a user interface 1300, a sensor unit 1500, and the memory 1600.

The wireless power transmitter 1100 may include a driving unit 1110 and the working coil 1120. The driving unit 1110 may receive power from an external source, and may supply a current to the working coil 1120, in response to a driving control signal of the processor 1400. The working coil 1120 may wirelessly transmit power to the cooking appliance 2000. The driving unit 1110 may include an electromagnetic interference (EMI) filter 1111, a rectification circuit 1112, an inverter circuit 1113, a distribution circuit 1114, a current sensing circuit 1115, and a driving processor 1116.

The EMI filter 1111 may filter out a high-frequency noise included in alternating current power supplied from an external source. The EMI filter 1111 may pass an alternating current voltage and an alternating current of a predetermined frequency (e.g., 50 Hz or 60 Hz). A fuse and a relay for blocking an overcurrent may be arranged between the EMI filter 1111 and the external source. The alternating current power obtained when the high-frequency noise is filtered out by the EMI filter 1111 may be supplied to the rectification circuit 1112.

The rectification circuit 1112 may convert alternating current power into direct current power. For example, the rectification circuit 1112 may convert an alternating current voltage (positive voltage or negative voltage) whose magnitude and polarity change with time into a direct current voltage whose magnitude and polarity are constant and may convert an alternating current (positive current or negative current) whose magnitude and direction change with time into a direct current whose magnitude is constant. The rectification circuit 1112 may include a bridge diode. For example, the rectification circuit 1112 may include a bridge diode consisting of four diodes. The bridge diode may convert an alternating current voltage whose polarity changes over time into a positive voltage whose polarity is constant and may convert an alternating current whose direction changes over time into a positive current whose direction is constant. The rectification circuit 1112 may include a direct current (DC) link capacitor. The DC link capacitor may convert a positive voltage whose magnitude changes with time into a DC voltage with a constant magnitude.

The inverter circuit 1113 may include a switching circuit for supplying or blocking a driving current to the working coil 1120 and a resonance circuit for generating a resonance together with the working coil 1120. The switching circuit may include a first switch and a second switch. The first switch and the second switch may be connected in series between a plus line and a minus line output from the rectification circuit 1112. The first switch and the second switch may be turned on or off according to a driving control signal of the driving processor 1116.

The inverter circuit 1113 may control a current supplied to the working coil 1120. For example, the magnitude and direction of a current flowing in the working coil 1120 may change according to the turn-on/off of the first switch and the second switch included in the inverter circuit 1113. In this case, an alternating current may be supplied to the working coil 1120. An alternating current in the form of a sine wave may be supplied to the working coil 1120 according to the switching operation of the first switch and the second switch. Also, as the switching period of the first switch and the second switch increases (e.g., as the switching frequency of the first switch and the second switch decreases), the current supplied to the working coil 1120 may increase and the strength of the magnetic field output by the working coil 1120 (the output of the wireless power transmission device 1000) may increase.

When the wireless power transmission device 1000 according to an embodiment of the disclosure includes a plurality of working coils 1120, the driving unit 1110 may include the distribution circuit 1114. The distribution circuit 1114 may include a plurality of switches for passing or blocking a current supplied to the plurality of working coils 1120. Each of the plurality of switches included in the distribution circuit 1114 may be turned on or off according to a distribution control signal of the driving processor 1116.

The current sensing circuit 1115 may include a current sensor for measuring a current output from the inverter circuit 1113. The current sensor may transmit an electrical signal corresponding to the measured current value to the driving processor 1116.

The driving processor 1116 may determine a switching frequency (turn-on/off frequency) of the switching circuit included in the inverter circuit 1113, based on the output strength (power level) of the wireless power transmission device 1000. The driving processor 1116 may generate a driving control signal for turning on/off the switching circuit according to the determined switching frequency.

The communication interface 1200 according to an embodiment of the disclosure may establish a wireless communication connection to the cooking appliance 2000. The communication interface 1200 may include one or more elements for establishing a wireless communication connection to the cooking appliance 2000. The communication interface 1200 may include one or more elements for communication between the wireless power transmission device 1000 and the cooking appliance 2000 or communication between the wireless power transmission device 1000 and the server apparatus. For example, the communication interface 1200 may include a short-range wireless communication interface 1210 and a long-range wireless communication interface 1220. The short-range wireless communication interface 1210 may include, but is not limited to, a Bluetooth communication interface, a BLE communication interface, a NFC interface, a WLAN (WiFi) communication interface, a ZigBee communication interface, an Infrared Data Association (IrDA) communication interface, a WiFi Direct (WFD) communication interface, an Ultra-Wideband (UWB) communication interface, an Ant+ communication interface, or the like.

The long-range wireless communication interface 1220 may be used for the cooking appliance 2000 to communicate with a server apparatus (not shown) when the cooking appliance 2000 is remotely controlled by the server apparatus in an Internet of Things (IoT) environment. The long-range wireless communication interface 1220 may include Internet, a computer network (e.g., LAN or WAN), and a mobile communication interface. The mobile communication interface may transmit/receive wireless signals to/from at least one of a base station, an external terminal, or a server on a mobile communication network. Here, the wireless signals may include voice call signals, video call signals, or various types of data according to transmission/reception of text/multimedia messages. The mobile communication interface may include, but is not limited to, a 3rd-generation (3G) module, a 4th-generation (4G) module, a long term evolution (LTE) module, a 5th-generation (5G) module, a 6th-generation (6G) module, a narrowband Internet of Things (NB-IoT) module, and/or an LTE-M module.

The user interface 1300 may include an output interface 1310 and an input interface 1320. The output interface 1310 according to an embodiment of the disclosure may further include a display unit and a sound output unit. The display unit according to an embodiment of the disclosure may display information about the cooking appliance 2000. For example, the display unit may output a graphical user interface (GUI) corresponding to identification information or product type information of the cooking appliance 2000. For example, the display unit may output information about a current location of the cooking appliance 2000. The sound output unit according to an embodiment of the disclosure may output audio data received from the communication interface 1200 or stored in the memory 1600. For example, the sound output unit may output a sound signal related to a function performed in the wireless power transmission device 1000. For example, the sound output unit may include a speaker, a buzzer, or the like.

According to an embodiment of the disclosure, when the processor 1400 does not receive information about the cooking zone 1700 in which the cooking appliance 2000 is located within a certain time period after controlling the inverter circuit 1113 such that the plurality of working coils 1120 generate magnetic fields according to a plurality of different power transmission patterns the output interface 1310 may output a notification for requesting a user to check the location of the cooking appliance 2000. Also, according to an embodiment of the disclosure, when the communication connection to the cooking appliance 2000 is released, the output interface 1310 may output a notification for requesting a user to check the location of the cooking appliance 2000.

The input interface 1320 is for receiving an input from a user. The input interface 1320 may be, but is not limited to, at least one of a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad), a jog wheel, or a jog switch.

The input interface 1320 may include a speech recognition module. For example, the wireless power transmission device 1000 may receive, via a microphone, a voice signal, which is an analog signal, and may convert a speech part into a computer-readable text by using an automatic speech recognition (ASR) model. The wireless power transmission device 1000 may interpret the text by using a natural language understanding (NLU) model to obtain an utterance intention of a user. Here, the ASR model or the NLU model may be an artificial intelligence (AI) model. The AI model may be processed by an AI-dedicated processor designed in a hardware structure specialized for processing an AI model. The AI model may be generated via a training process. Here, being generated via a training process may mean that predefined operation rules or AI model set to perform desired characteristics (or purposes), is generated by training a basic AI model by using a learning algorithm that utilizes a large amount of training data. The AI model may include a plurality of neural network layers. Each of the neural network layers may include a plurality of weight values, and may perform a neural network arithmetic operation via an arithmetic operation between an arithmetic operation result of a previous layer and the plurality of weight values.

Linguistic understanding is a technology to recognize and apply/process human language/characters and includes natural language processing, machine translation, dialogue systems, question answering, speech recognition/synthesis, and the like.

According to an embodiment of the disclosure, the processor 1400 may be an AI processor. The AI processor may be manufactured in the form of a dedicated hardware chip for AI, or may be manufactured as part of an existing general-purpose processor (e.g., a central processing unit (CPU) or an application processor) or a dedicated graphics processor (e.g., a graphics processing unit (GPU)), and then mounted on the wireless power transmission device 1000.

According to an embodiment of the disclosure, the processor 1400 may control the wireless power transmitter 1100 to supply the cooking appliance 2000 with power of a preset level for driving the communication interface of the cooking appliance 2000. When the communication interface of the cooking appliance 2000 is driven, the processor 1400 may receive a first wireless communication signal transmitted from the communication interface of the cooking appliance 2000. The first wireless communication signal may include, but is not limited to, the identification information (e.g., the MAC address) of the cooking appliance 2000 or information indicating that the current location of the cooking appliance 2000 is not identifiable.

When the first wireless communication signal transmitted from the cooking appliance 2000 is detected, the processor 1400 may control the wireless power transmitter 1100 such that the plurality of working coils 1120 generate magnetic fields according to a plurality of different power transmission patterns. The plurality of power transmission patterns may be set differently based on at least one of a duration of a power transmission interval, a duration of a power cutoff interval, a power level, or an operation frequency. For example, the processor 1400 may control the wireless power transmitter 1100 to transmit power by differently combining a duration of a power transmission interval, a duration of a power cutoff interval, or a power level (i.e., an operation frequency) for respective cooking zones.

The processor 1400 according to an embodiment of the disclosure may receive, from the cooking appliance 2000 via the communication interface 1200, a second wireless communication signal including the identification information (or the product type information) of the cooking appliance 2000 and information about a first cooking zone corresponding to a first power transmission pattern detected at the position of the cooking appliance 2000, among a plurality of power transmission patterns. The processor 1400 may output, via the output interface 1310, information about the first cooking zone on which the cooking appliance 2000 is located among the plurality of cooking zones, and the identification information (or the product type information) of the cooking appliance 2000, based on the second wireless communication signal.

According to an embodiment of the disclosure, when the processor 1400 detects that the cooking appliance 2000 is located on the top plate of the wireless power transmission device 1000 and then cannot receive a first wireless communication signal from the cooking appliance 2000 within a preset time, the processor 1400 may recognize the cooking appliance 2000 as a general IH container. As the processor 1400 detects the first wireless communication signal from the cooking appliance 2000 via the communication interface 1200, the processor 1400 may recognize the cooking appliance 2000 as the IH load device 2000-1 or the induced voltage load device 2000-2.

According to an embodiment of the disclosure, the processor 1400 may perform communication connection to the cooking appliance 2000, based on communication connection information included in a second wireless communication signal, and may control the wireless power transmitter 1100 to transmit, to a pickup coil of the cooking appliance 2000, first-level power (small power) for maintaining the communication connection to the cooking appliance 2000. Also, as a heating command with respect to the cooking appliance 2000 is received from a user, the processor 1400 may control the wireless power transmitter 1100 to transmit, to the cooking appliance 2000, second-level power (high power) for heating the cooking appliance 2000. Here, the first-level power is power smaller than the second-level power. Also, the processor 1400 may control power transmission to the cooking appliance 2000, based on power control information (e.g., a power level value or maintaining time information) received from the cooking appliance 2000. Here, the control power transmission may be determined based on recipe information applied to the cooking appliance 2000.

The sensor unit 1500 may include, but is not limited to, a container detection sensor 1510 and a temperature sensor 1520.

The container detection sensor 1510 may be a sensor configured to detect that the cooking appliance 2000 is placed on the top plate of the wireless power transmission device 1000. For example, the container detection sensor 1510 may be implemented as a current sensor but the disclosure is not limited thereto. The container detection sensor 1510 may be implemented as at least one of a proximity sensor, a touch sensor, a weight sensor, a temperature sensor, a luminance sensor, or a magnetic sensor.

The temperature sensor 1520 may detect a temperature of the cooking appliance 2000 placed on the top plate of the wireless power transmission device 1000 or a temperature of the top plate of the wireless power transmission device 1000. The cooking appliance 2000 may be induction-heated by the working coil 1120 of the wireless power transmission device 1000. The induction-heated cooking appliance 2000 may be overheated according to a material of the cooking appliance 2000. Therefore, the wireless power transmission device 1000 may detect a temperature of the cooking appliance 2000 placed on the top plate or a temperature of the top plate, by using the temperature sensor 1520, and when the cooking appliance 2000 or the top plate is overheated, the wireless power transmission device 1000 may stop an operation of the working coil 1120. The temperature sensor 1520 may be installed near the working coil 1120. For example, the temperature sensor 1520 may be located at the middle of the working coil 1120.

According to an embodiment of the disclosure, the temperature sensor 1520 may include a thermistor of which electric resistance value varies according to temperature. For example, the temperature sensor 1520 may be a negative temperature coefficient (NTC) temperature sensor but the disclosure is not limited thereto. The temperature sensor 1520 may be a positive temperature coefficient (PTC) temperature sensor.

The memory 1600 may store a program for processing and control by the processor 1400, and may store a plurality of pieces of input/output data (e.g., a plurality of power transmission patterns, cooking progress state information of the cooking appliance 2000, etc.). The memory 1600 may store an AI model.

The memory 1600 may include at least one type of storage media including a flash memory type, a hard disk type, a multimedia card micro type, a card type memory (for example, a secure digital (SD) or an extreme digital (XD) memory), a random access memory (RAM), a static RAM (SRAM), a read-only memory (ROM), an electrically erasable programmable ROM (EEPROM), a programmable ROM (PROM), a magnetic memory, a magnetic disk, and an optical disk. Programs stored in the memory 1600 may be divided into a plurality of modules according to their functions. At least one AI model may be stored in the memory 1600. The wireless power transmission device 1000 may operate a web storage or a cloud server for performing a storage function on the Internet, separately from the memory 1600.

Hereinafter, structures of a general IH container, an IH cooking appliance, and a load cooking appliance will now be described with reference to FIG. 4.

FIG. 4 is a diagram illustrating the cooking appliance 2000 according to an embodiment of the disclosure.

The cooking appliance 2000 according to an embodiment of the disclosure may include a cooking container (general IH container) including a magnetic material (e.g., IH metal) 20 and the cooking appliance 2000 capable of communicating with the wireless power transmission device 1000. The cooking appliance 2000 capable of communicating with the wireless power transmission device 1000 may be defined as a small appliance. According to an embodiment of the disclosure, the cooking appliance 2000 may be divided into the IH load device 2000-1 including IH metal (e.g., iron component) and the induced voltage load device 2000-2 including a receiving coil 2003. The IH load device 2000-1 may be referred to as an IH cooking appliance. The induced voltage load device 2000-2 may be divided into a heater cooking appliance and a non-heating cooking appliance, according to a type of a load thereof.

The general IH container 20 according to an embodiment of the disclosure may be a container with various shapes including a magnetic material. The general IH container 20 may be induction-heated by the wireless power transmission device 1000. The general IH container 20 may be heated in an IH scheme of heating IH metal by using electromagnetic induction. For example, when an alternating current is supplied to the working coil 1120 of the wireless power transmission device 1000, a magnetic field that changes over time may be induced in the working coil 1120. The magnetic field generated by the working coil 1120 may pass through a bottom surface of the general IH container 20. When the magnetic field that changes over time passes through IH metal (e.g., iron, steel, nickel, or various types of alloys) included in the bottom of the general IH container 20, a current rotating around the magnetic field may be generated in the IH metal. The current generated at the bottom of the general IH container 20 may be referred to as an eddy current. A phenomenon in which a current is induced by a magnetic field that changes over time in IH metal is referred to as an electromagnetic induction phenomenon. Heat may be generated at the bottom of the general IH container 20 due to the resistance of the eddy current and the IH metal (e.g., iron). Due to the heat generated at the bottom of the general IH container 20, content in the general IH container 20 may be heated.

According to an embodiment of the disclosure, the general IH container 20 includes IH metal, and thus, may be detected in an IH container detection mode (pan detection mode) of the wireless power transmission device 1000. The general IH container 20 is not able to perform communication with the wireless power transmission device 1000, and thus, may not be detected in the small appliance detection mode of the wireless power transmission device 1000.

The wireless power transmission device 1000 may include a pickup coil 2001, a first temperature sensor 2006, a power module 2010, a controller 2020, and a communication interface 2030. Here, the power module 2010, the controller 2020, and the communication interface 2030 may be mounted on a printed circuit board (PCB) 2005. The pickup coil 2001 may be a coil for small power which is configured to generate power for operating the PCB 2005. When power is supplied to the PCB 2005 via the pickup coil 2001, parts mounted on the PCB 2005 may be activated. For example, when power is supplied to the PCB 2005 via the pickup coil 2001, the controller 2020, the communication interface 2030, or the like may be activated. The power module 2010, the controller 2020, and the communication interface 2030 may be mounted on one PCB or may be separately mounted on a plurality of PCBs. For example, the power module 2010 may be mounted on a first PCB, and the controller 2020 and the communication interface 2030 may be mounted on a second PCB.

In the IH load device 2000-1, as an eddy current is generated in IH metal, as in the IH container 20, content in the IH load device 2000-1 may be heated. The IH load device 2000-1 may include, but is not limited to, a smart kettle, an electronic rice cooker (smart pot), or the like.

As the IH load device 2000-1 includes IH metal, the IH load device 2000-1 may be detected in the IH container detection mode of the wireless power transmission device 1000. As the IH load device 2000-1 is able to communicate with the wireless power transmission device 1000, the IH load device 2000-1 may be detected in the small appliance detection mode of the wireless power transmission device 1000.

Compared to the IH load device 2000-1, the induced voltage load device 2000-2 may further include the receiving coil 2003 and a load 2004. The receiving coil 2003 may be a coil configured to receive wireless power transmitted from the wireless power transmission device 1000 so as to drive the load 2004. For example, a magnetic field that is generated from a current flowing in the working coil 1120 of the wireless power transmission device 1000 may pass through the receiving coil 2003. As the magnetic field passes through, an induced current may flow in the receiving coil 2003. Energy (power) may be supplied to the load 2004, due to the induced current flowing in the receiving coil 2003. Hereinafter, that an induced current flows in the receiving coil 2003 due to a magnetic field generated in a working coil may be expressed that the receiving coil 2003 receives wireless power from the working coil. According to an embodiment of the disclosure, the receiving coil 2003 may have a concentric circle shape or an oval shape, but the disclosure is not limited thereto. According to an embodiment of the disclosure, the receiving coil 2003 may be provided in plural. For example, the induced voltage load device 2000-2 may include a receiving coil for warming heater and a receiving coil for heating heater. Here, the receiving coil for heating heater may drive a heating heater, and the receiving coil for warming heater may drive a warming heater.

The load 2004 may include, but is not limited to, a heater, a motor, a rechargeable battery, or the like. The induced voltage load device 2000-2 including the heater may be referred to as a heater cooking appliance. The induced voltage load device 2000-2 including the motor or the like may be referred to as a non-heating cooking appliance. The heater is provided to heat content in the induced voltage load device 2000-2. The heater included in the heater cooking appliance may have various shapes, and an external cover of the heater cooking appliance may also include various materials (e.g., iron, stainless steel, copper, aluminum, Incoloy, Incotel, etc.). According to an embodiment of the disclosure, the heater cooking appliance may include a plurality of heaters. For example, the induced voltage load device 2000-2 may include a warming heater and a heating heater. The warming heater and the heating heater may output heating outputs with different levels. For example, a heating level of the warming heater may be lower than a heating level of the heating heater.

According to an embodiment of the disclosure, the induced voltage load device 2000-2 may further include a resonance capacitor (not shown) between the receiving coil 2003 and the load 2004. Here, a resonance value may be differently set according to a requested amount of power for the load 2004. Also, according to an embodiment of the disclosure, the induced voltage load device 2000-2 may further include a switch unit (e.g., a relay switch or a semiconductor switch) (not shown) configured to turn on/off an operation of the load 2004.

According to an embodiment of the disclosure, the heater cooking appliance among the induced voltage load device 2000-2 may include a coffee maker (coffee dripper), a toaster, or the like. According to an embodiment of the disclosure, the non-heating cooking appliance including the motor among the induced voltage load device 2000-2 may include a blender.

As the induced voltage load device 2000-2 does not include IH metal, the induced voltage load device 2000-2 may not be detected in the IH container detection mode of the wireless power transmission device 1000. The induced voltage load device 2000-2 is able to perform communication with the wireless power transmission device 1000, and thus, may be detected in the small appliance detection mode of the wireless power transmission device 1000.

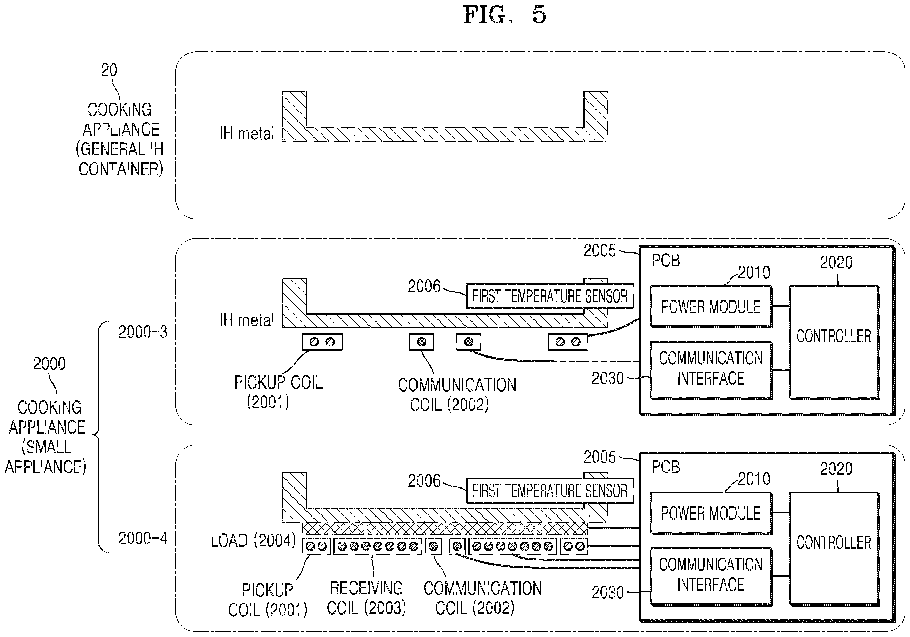

Hereinafter, structures of a general IH container, an IH cooking appliance including a communication coil, and a load cooking appliance including a communication coil will now be described with reference to FIG. 5.

FIG. 5 is a diagram illustrating the cooking appliance 2000 according to an embodiment of the disclosure.

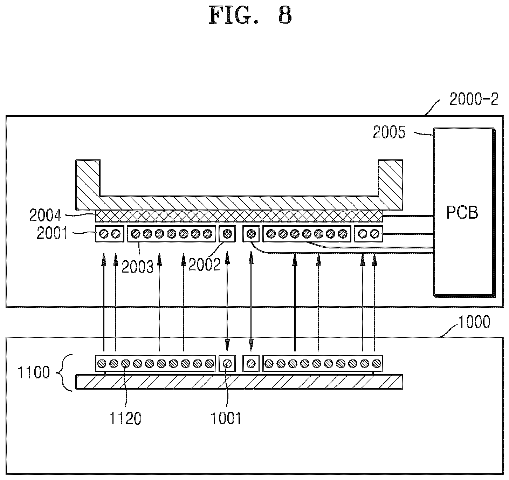

Referring to FIG. 5, the cooking appliance 2000 may further include a communication coil 2002. The communication coil 2002 may be a coil configured to perform short-range wireless communication with the wireless power transmission device 1000. For example, the communication coil 2002 may be an NFC antenna coil for NFC communication. Referring to FIG. 8, the number of windings of the communication coil 2002 is one, but the disclosure is not limited thereto. The number of windings of the communication coil 2002 may be plural. For example, the communication coil 2002 may be wound in 5 or 6 turns. When the communication coil 2002 is the NFC antenna coil, the communication coil 2002 may be connected to an NFC circuit. The NFC circuit may receive power via the pickup coil 2001.

According to an embodiment of the disclosure, in an induced voltage load device 2000-4, the pickup coil 2001, the communication coil 2002, and the receiving coil 2003 may be provided on a same layer. For example, referring to FIG. 5, the communication coil 2002 may be arranged at the innermost side, the receiving coil 2003 may be arranged at the middle side, and the pickup coil 2001 may be arranged at the outermost side. However, the disclosure is not limited thereto, and a disposal order of the pickup coil 2001, the communication coil 2002, and the receiving coil 2003 may be variously changed. For example, the receiving coil 2003 may be arranged at the innermost side, the pickup coil 2001 may be arranged at the middle side, and the communication coil 2002 may be arranged at the outermost side. Also, the receiving coil 2003 may be arranged at the innermost side, the communication coil 2002 may be arranged at the middle side, and the pickup coil 2001 may be arranged at the outermost side. The pickup coil 2001, the communication coil 2002, and the receiving coil 2003 may be arranged from the innermost side in orders below.
1) pickup coil 2001 - receiving coil 2003 - communication coil 2002
2) pickup coil 2001 - communication coil 2002 - receiving coil 2003
3) communication coil 2002 - pickup coil 2001 - receiving coil 2003

According to an embodiment of the disclosure, the pickup coil 2001, the communication coil 2002, and the receiving coil 2003 may be stacked in the induced voltage load device 2000-4. For example, the pickup coil 2001 and the communication coil 2002 with a small number of windings may form one layer, the receiving coil 2003 may form another layer, and then the two layers may be stacked.

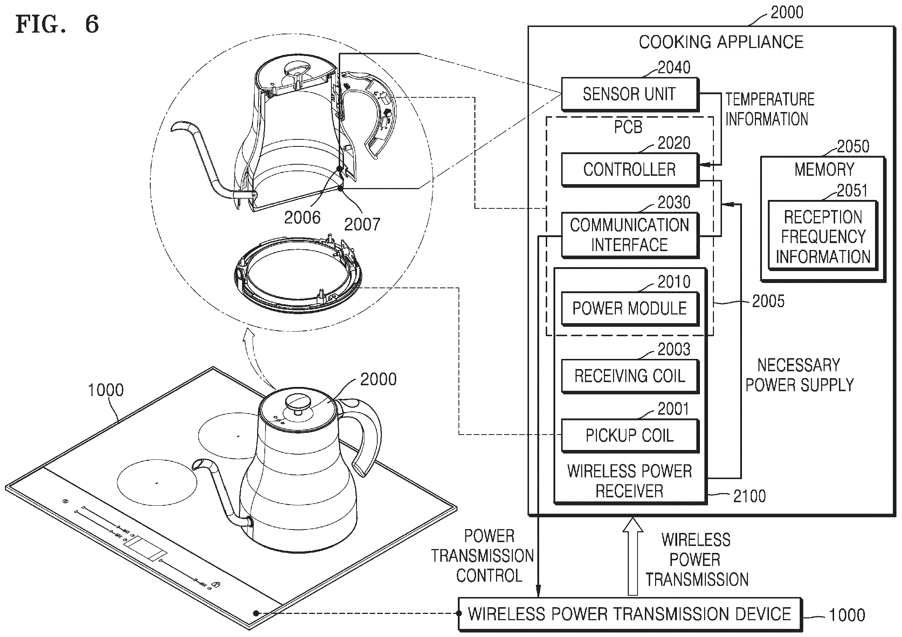

Hereinafter, a structure of a cooking appliance will now be described in detail with reference to FIG. 6.

FIG. 6 is a diagram illustrating the cooking appliance 2000 according to an embodiment of the disclosure.

The cooking appliance 2000 according to an embodiment of the disclosure may include a wireless power receiver 2100, a controller 2020, a communication interface 2030, a sensor unit 2040, and memory 2050. The wireless power receiver 2100 may include the pickup coil 2001, the receiving coil 2003, and the power module 2010. According to an embodiment of the disclosure, the power module 2010, the controller 2020, and the communication interface 2030 may be mounted on the PCB 2005. When the power module 2010, the controller 2020, and the communication interface 2030 are mounted on the PCB 2005, the PCB 2005 may be defined as a printed circuit assembly (PCA). Hereinafter, the elements will be sequentially described.

The wireless power receiver 2100 may receive power being wirelessly transmitted from the wireless power transmission device 1000. The wireless power receiver 2100 may supply the received power to the controller 2020 and the communication interface 2030. The wireless power receiver 2100 may include the pickup coil 2001 and the power module 2010.

The pickup coil 2001 may be a coil for small power which is configured to generate power for operating the PCB 2005. When power is supplied to the PCB 2005 via the pickup coil 2001, parts mounted on the PCB 2005 may be activated. For example, when power is supplied to the PCB 2005 via the pickup coil 2001, the power module 2010, the controller 2020, and the communication interface 2030 may be activated.

The receiving coil 2003 may be a coil for high power which is configured to receive power for heating content in the cooking appliance 2000 or for operating the cooking appliance 2000. When power transmitted from the wireless power transmission device 1000 is received via the receiving coil 2003, content in the cooking appliance 2000 may be heated or the cooking appliance 2000 may be operated. For example, when power is supplied via the receiving coil 2003, an external wall of the cooking appliance 2000 may be heated or the load 2004 of the cooking appliance 2000 receives power so as to operate the cooking appliance 2000.

The power module 2010 may be a power control circuit configured to supply direct current (DC) power to the controller 2020 and the communication interface 2030 by receiving alternating current (AC) power from the pickup coil 2001. For example, the power module 2010 may convert AC power of 7 to 30V input from the pickup coil 2001 into DC power of 3.3V, and may supply DC power of 3.3V to the controller 2020 and the communication interface 2030. The power module 2010 may include an inverter and/or a converter configured to supply power when the controller 2020, the communication interface 2030, and other elements in the cooking appliance 2000 require AC power and/or DC power in forms other than commercial AC power.

The power module 2010 may include an AC-DC converter and a DC-DC converter. The AC-DC converter may include a transformer, a rectifier (rectifier the circuit), and a smoothing circuit. The rectifier may convert an AC voltage (positive voltage or negative voltage) whose magnitude and polarity change over time into a DC voltage whose magnitude and polarity are constant, and may convert an AC current (positive current or negative current) whose magnitude and direction change over time into a DC current whose magnitude is constant. The rectifier may include a bridge diode. The bridge diode may convert an AC voltage whose polarity changes over time into a positive voltage whose polarity is constant, and may convert an AC current whose direction changes over time into a positive current whose direction is constant. The smoothing circuit may include a DC link capacitor. The DC link capacitor may convert a positive voltage whose magnitude changes over time into a DC voltage whose magnitude is constant. The inverter connected to the DC link capacitor may generate AC power with various frequencies and magnitudes the cooking appliance 2000 requires, and the DC-DC converter may generate DC power with various magnitudes the cooking appliance 2000 requires.

The controller 2020 may include one or more processors. The one or more processors may control an overall operation of the cooking appliance 2000. For example, the one or more processors included in the controller 2020 may control the power module 2010 and the communication interface 2030. The controller 2020 may include one processor or may include a plurality of processors. For example, the controller 2020 may include only a main processor, or may include a main processor and at least one sub-processor. The one or more processors may include a central processing unit (CPU), a microprocessor, an application specific integrated circuit (ASIC), a field programmable gate arrays (FPGAs), an application processor (AP), a digital signal processor (DSP), a communication processor (CP) together with an RF processor, and the base band processor. The one or more processors may be a set of one or more processors or may be a multi-processor core, depending on the particular implementation. Here the set of one or more processors may include one or more microprocessor, an application specific integrated circuit (ASIC), a field programmable gate arrays (FPGAs), an application processor (AP), a digital signal processor (DSP), a communication processor (CP), one or more of an application processor (e.g. a central processing unit (CPU)), a communication processor (e.g., a modem), a graphical processing unit (GPU), a neural processing unit (NPU) (e.g., an artificial intelligence (AI) chip), a Wi-Fi chip, a Bluetooth chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, or the like. The device may perform operations based collectively on different processors of the one or more processors executing different instructions of the one or more programs. Further, the processor may be implemented using one or more heterogeneous processor systems in which a main processor is present with secondary processors on a single chip. As another illustrative example, the processor may be a symmetric multi-processor system containing multiple processors of the same type. Memory may include one or more computer-readable storage media. The computer-readable storage media are, for example, tangible and non-transitory. Memory may include high-speed random access memory and also includes non-volatile memory, such as one or more magnetic disk storage devices, flash memory devices, or other non-volatile solid-state memory devices. In some examples, one of more non-transitory computer-readable storage media of memory is used to store instructions (e.g., for performing aspects of operations described herein) for use by or in connection with the processor, which can fetch and execute the instructions. The memory may be distributed among different types of memory, with any given type being a singular or plural memory. Different memory may be used by, or associated with, a different at least one of the one or more processors.

According to an embodiment of the disclosure, the controller 2020 may detect a power transmission pattern of power received from the wireless power transmission device 1000 via the power module 2010, thereby identifying a current location of the cooking appliance 2000. For example, the controller 2020 may compare the detected power transmission pattern with pre-stored power transmission patterns for each cooking zone 1700, thereby determining which power transmission pattern of which cooking zone 1700 matches the detected power transmission pattern.

The controller 2020 may control the communication interface 2030 to transmit or receive data. For example, the controller 2020 may control the communication interface 2030 to transmit, to the wireless power transmission device 1000, at least one of unique identification information of the cooking appliance 2000, variable identification information of the cooking appliance 2000, or communication connection information of the cooking appliance 2000. The controller 2020 may change the variable identification information according to a state of the cooking appliance 2000. For example, the controller 2020 may generate or change the variable identification information, based on a registration state of the cooking appliance 2000, the cooking zone 1700 in which the cooking appliance 2000 is located, or a product type of the cooking appliance 2000.

According to an embodiment of the disclosure, the controller 2020 may measure a temperature of content by using the first temperature sensor 2006. For example, the controller 2020 may measure a temperature of content according to a change in a sensor value (e.g., a change in resistance) of the first temperature sensor 2006. For example, the controller 2020 may monitor the temperature of the content at regular intervals (e.g., one second) by using the first temperature sensor 2006. For example, the controller 2020 may control the communication interface 2030 to transmit temperature information of the content to the wireless power transmission device 1000 via short-range wireless communication. For example, the controller 2020 may control the communication interface 2030 to transmit, to the wireless power transmission device 1000, power control information for controlling a power level or a power maintaining time of the wireless power transmission device 1000. For example, when the cooking appliance 2000 operates in a warming mode for maintaining a temperature of content at a constant temperature, the controller 2020 may determine a communication interval with respect to the wireless power transmission device 1000 or a pan detection interval with respect to the wireless power transmission device 1000. The controller 2020 may transmit, to the wireless power transmission device 1000, the power control information including a wake-up time corresponding to the determined communication interval, a power level value, the pan detection interval, or the like. The wireless power transmission device 1000 may transmit power for driving the communication interface 2030 of the cooking appliance 2000 at regular intervals based on the power control information. The wireless power transmission device 1000 may perform a pan detection operation according to the pan detection interval.

The communication interface 2030 may include one or more elements for enabling communication between the cooking appliance 2000 and the wireless power transmission device 1000, communication between the cooking appliance 2000 and a server apparatus (not shown), or communication between the cooking appliance 2000 and a mobile terminal (not shown). The communication interface 2030 of the cooking appliance 2000 may include a short-range wireless communication interface and a long-range wireless communication interface.

The short-range wireless communication interface may include, but is not limited to, a Bluetooth communication interface, a BLE communication interface, a NFC interface, a WLAN (WiFi) communication interface, a ZigBee communication interface, an IrDA communication interface, a WFD communication interface, an UWB communication interface, an Ant+ communication interface, or the like. The long-range wireless communication interface may be used for the cooking appliance 2000 to communicate with a server apparatus (not shown) when the cooking appliance 2000 is remotely controlled by the server apparatus in an IoT environment. The long-range wireless communication interface may include Internet, a computer network (e.g., LAN or WAN), and a mobile communication interface. The mobile communication interface may include, but is not limited to, a 3G module, a 4G module, a 5G module, an LTE module, an NB-IoT module, an LTE-M module, or the like.

According to an embodiment of the disclosure, the cooking appliance 2000 may transmit information to the server apparatus via the wireless power transmission device 1000. For example, the cooking appliance 2000 may transmit information (e.g., temperature information of content, etc.) obtained from the cooking appliance 2000 to the wireless power transmission device 1000 via short-range wireless communication (e.g., Bluetooth, BLE, etc.). Here, the wireless power transmission device 1000 may access the server apparatus via the WLAN (WiFi) communication interface and the long-range wireless communication interface (Internet), thereby transmitting the information (e.g., the temperature information of content, etc.) obtained from the cooking appliance 2000 to the server apparatus. The server apparatus may provide the information obtained from the cooking appliance 2000, which is received from the wireless power transmission device 1000, to a user via a mobile terminal connected to the server apparatus. According to an embodiment of the disclosure, the wireless power transmission device 1000 may directly transmit the information obtained from the cooking appliance 2000 to the mobile terminal of the user via device-to-device (D2D) communication (e.g., WFD communication or BLE communication).

The sensor unit 2040 may include at least one temperature sensor. For example, the sensor unit 2040 may include, but is not limited to, the first temperature sensor 2006 (hereinafter, also referred to as the water temperature sensor) for measuring a temperature of content in the cooking appliance 2000 and a second temperature sensor 2007 (hereinafter, an outer container temperature sensor or a pot temperature sensor) for measuring a temperature of an outer container of the cooking appliance 2000. The sensor unit 2040 may include a third temperature sensor configured to detect abnormal overheating.

At least one temperature sensor included in the sensor unit 2040 may be a contact-scheme temperature sensor, and may include a thermistor of which electric resistance value varies according to temperature. For example, the first temperature sensor 2006 and the second temperature sensor 2007 may each be an NTC temperature sensor or a PTC temperature sensor.

The first temperature sensor 2006 may be provided at a location at which a direct contact to content is available, but the disclosure is not limited thereto. The first temperature sensor 2006 may be provided to measure a temperature of a container inserted into the cooking appliance 2000. In this case, the controller 2020 may predict a temperature of content, based on the temperature of the container. Hereinafter, for convenience of descriptions, a case in which the first temperature sensor 2006 is a sensor configured to measure a temperature of content by directly contacting the content will now be mainly described as an example.

The memory 2050 may store reception frequency information 2051 corresponding to each of a plurality of wireless power transmission devices 1000. The reception frequency information 2051 may include a frequency value of power that is transmitted from the wireless power transmission device 1000 and then is received by the cooking appliance 2000. The reception frequency information 2051 may include frequency values respectively corresponding to the plurality of wireless power transmission devices 1000.

The memory 2050 may store a program for processing and control by the controller 2020. The memory 2050 may store a plurality of pieces of input/output data (e.g., power transmission pattern information for each cooking zone 1700 of the wireless power transmission device 1000, unique identification information of the cooking appliance 2000, variable identification information of the cooking appliance 2000, recipe information, operation mode information (e.g., warming mode, standby mode, heating mode, etc.) or the like).

However, not all elements shown in FIG. 6 are necessary elements. The cooking appliance 2000 may be implemented with more elements than the elements shown in FIG. 6 or may be implemented with fewer elements than the elements shown in FIG. 6. For example, the cooking appliance 2000 may be implemented with the wireless power receiver 2100, the communication interface 2030, the first temperature sensor 2006, and one or more processors. Also, the cooking appliance 2000 may further include a user interface, a battery, etc., in addition to the wireless power receiver 2100, the controller 2020, and the communication interface 2030. Here, the user interface may include an input interface configured to receive an input of a user, and an output interface configured to output information. The output interface is provided to output a video signal or an audio signal. The output interface may include a display unit, a sound output unit, a vibration motor, etc. When the display unit and a touch pad are configured as a touch screen by forming a layer structure, the display unit may be used as an input interface as well as an output interface. The sound output unit may output an audio signal received via the communication interface 2030 or stored in the memory 2050.

According to an embodiment of the disclosure, when the cooking appliance 2000 includes the battery, power received via the pickup coil 2001 may be used not only in operations of the controller 2020, the communication interface 2030, and the first temperature sensor 2006 but also used in charging the battery. When the battery is charged, the cooking appliance 2000 may use power of the battery as auxiliary power. Therefore, even when the cooking appliance 2000 does not receive power from the wireless power transmission device 1000, the cooking appliance 2000 may drive the controller 2020 and the communication interface 2030 by using the power of the battery. For example, in a case where the cooking appliance 2000 provides a warming function, even when power transmission from the wireless power transmission device 1000 is stopped, the cooking appliance 2000 may monitor a temperature of content by using the power of the battery. Also, the cooking appliance 2000 may maintain communication connection to the wireless power transmission device 1000 by using the power of the battery, and may continuously transmit information about a temperature of content to the wireless power transmission device 1000 at regular intervals. In this regard, when the temperature of the content is equal to or lower than a threshold warming temperature while the wireless power transmission device 1000 monitors the temperature of the content, the wireless power transmission device 1000 may transmit power for driving the controller 2020 and the communication interface 2030 of the cooking appliance 2000. Therefore, in a case where the cooking appliance 2000 includes the battery, the cooking appliance 2000 may determine a communication interval with respect to the wireless power transmission device 1000 to be longer in the warming mode.

According to an embodiment of the disclosure, before the cooking appliance 2000 receives power from the wireless power transmission device 1000, the cooking appliance 2000 may drive the communication interface 2030 by using the power of the battery and transmit a wireless communication signal to the wireless power transmission device 1000, thereby allowing the wireless power transmission device 1000 to recognize the cooking appliance 2000 in advance. The battery may include a secondary battery (e.g., a lithium ion battery, a nickel-cadmium battery, a polymer battery, a nickel hydride battery, etc.), a super-capacitor, or the like. The super-capacitor is a capacitor with significantly large capacitance and is referred to as an ultra-capacitor or an ultra-high-capacity capacitor.

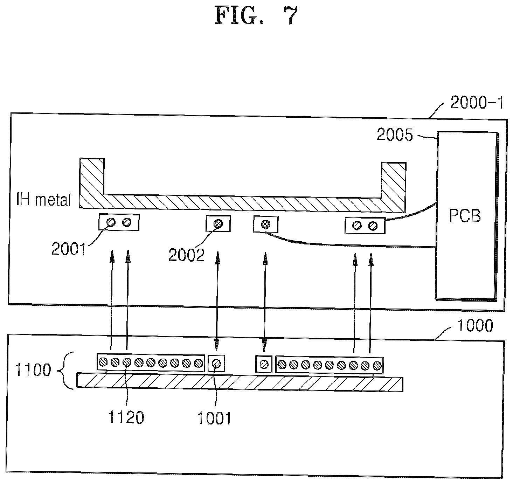

Hereinafter, a power transmission/reception procedure between the wireless power transmission device 1000 and the IH load device 2000-1 will now be described with reference to FIG. 7.

FIG. 7 is a diagram illustrating a power transmission/reception structure between the wireless power transmission device 1000 and the IH load device 2000-1, according to an embodiment of the disclosure.

According to an embodiment of the disclosure, the wireless power transmission device 1000 may include the working coil 1120 and a communication coil 1001. For example, the communication coil 1001 may be an NFC antenna coil for NFC communication. Referring to FIG. 7, the number of windings of the communication coil 1001 is one, but the disclosure is not limited thereto. The number of windings of the communication coil 1001 may be plural. For example, the communication coil 1001 may be wound in 5 or 6 turns.

According to an embodiment of the disclosure, the communication coil 1001 included in the wireless power transmission device 1000 and the communication coil 2002 included in the IH load device 2000-1 may be arranged to correspond to each other. For example, when the communication coil 1001 included in the wireless power transmission device 1000 is arranged in the middle of the cooking zone 1700 of the wireless power transmission device 1000, the communication coil 2002 included in the IH load device 2000-1 may also be arranged at a bottom center of a cooking appliance 2000-3 or 2000-4.

In an embodiment of the disclosure, when the IH load device 2000-1 is placed on the wireless power transmission device 1000, the wireless power transmission device 1000 may supply power to the pickup coil 2001 via the working coil 1120. When the wireless power transmission device 1000 wirelessly transmits first power via the working coil 1120, an eddy current is generated in the IH load device 2000-1 such that content in the IH load device 2000-1 may be heated.

FIG. 7 illustrates a case in which the wireless power transmission device 1000 includes the communication coil 1001, but when the IH load device 2000-1 does not include the communication coil 2002 (see FIG. 4), the wireless power transmission device 1000 may not include the communication coil 1001.

Hereinafter, a power transmission/reception procedure between the wireless power transmission device 1000 and the induced voltage load device 2000-2 will now be described with reference to FIG. 8.

FIG. 8 is a diagram illustrating a power transmission/reception structure between the wireless power transmission device 1000 and the induced voltage load device 2000-2, according to an embodiment of the disclosure.

According to an embodiment of the disclosure, the wireless power transmission device 1000 may include the working coil 1120 and a communication coil 1001. For example, the communication coil 1001 may be an NFC antenna coil for NFC communication. Referring to FIG. 8, the number of windings of the communication coil 1001 is one, but the disclosure is not limited thereto. The number of windings of the communication coil 1001 may be plural. For example, the communication coil 1001 may be wound in 5 or 6 turns.

According to an embodiment of the disclosure, the communication coil 1001 included in the wireless power transmission device 1000 and the communication coil 2002 included in the induced voltage load device 2000-2 may be arranged to correspond to each other. For example, when the communication coil 1001 included in the wireless power transmission device 1000 is arranged in the middle of the cooking zone 1700 of the wireless power transmission device 1000, the communication coil 2002 included in the induced voltage load device 2000-2 may also be arranged at the bottom center of the cooking appliance 2000-3 or 2000-4.

When the induced voltage load device 2000-2 is placed on the wireless power transmission device 1000, the wireless power transmission device 1000 may supply power to the pickup coil 2001 via the working coil 1120. Also, when the wireless power transmission device 1000 wirelessly transmits first power via the working coil 1120, an induced current flows in the receiving coil 2003 of the induced voltage load device 2000-2, such that energy may be provided to the load 2004. The load 2004 may be arranged at a location separate from the receiving coil 2003. The load 2004 may include a motor or a heater. For example, when the induced voltage load device 2000-2 is a coffee dripper, power generated due to the induced current may supply energy to a heater of the coffee dripper. For example, when the induced voltage load device 2000-2 is a blender, power generated due to the induced current may drive a motor of the blender.

FIG. 8 illustrates a case in which the wireless power transmission device 1000 includes the communication coil 1001, but when the induced voltage load device 2000-2 does not include the communication coil 2002 (see FIG. 4), the wireless power transmission device 1000 may not include the communication coil 1001.

Hereinafter, an operation according to a control method of the wireless power transmission device 1000 will now be described with reference to FIG. 9.

FIG. 9 is a flowchart illustrating a control method of the wireless power transmission device 1000, according to an embodiment of the disclosure.

In operation S910, the processor 1400 of the wireless power transmission device 1000 may control the communication interface 1200 to receive identification information related to a type of the cooking appliance 2000.

The identification information related to the type of the cooking appliance 2000 may a serial number, code, or digital data which includes information related to the type of the cooking appliance 2000. In an embodiment of the disclosure, the identification information may include at least one of a MAC address, a model name, load device type information (e.g., IH type ID, heater type ID, motor type ID, or small appliance type ID), manufacturer information (e.g., manufacturer ID), a serial number, or manufacture time information (e.g., date of production). For example, the load device type information may include information indicating whether the cooking appliance 2000 is the IH load device (IH type ID) 2000-1, the induced voltage load device (heater type ID) 2000-2 including a heater, or the induced voltage load device (motor type ID) 2000-2 including a motor.

The processor 1400 may establish a wireless communication connection to the cooking appliance 2000. For example, the processor 1400 may establish a BLE communication channel with the cooking appliance 2000, but the disclosure is not limited thereto.

The processor 1400 may control the communication interface 1200 to receive the identification information from the cooking appliance 2000. For example, the processor 1400 may control the communication interface 1200 to extract identification information related to a type of the cooking appliance 2000 from an advertisement packet or a data packet transmitted from the cooking appliance 2000. The advertisement packet or the data packet transmitted from the cooking appliance 2000 may be data being transmitted from the cooking appliance 2000 before a wireless communication connection to the cooking appliance 2000 is established or while the wireless communication connection is being established. The processor 1400 may control the communication interface 1200 to extract identification information related to a type of the cooking appliance 2000 from an advertisement packet or a data packet. If the identification information is not received, the processor 1400 may control the communication interface 1200 to transmit, to the cooking appliance 2000, an information request requesting transmission of identification information related to a type of the cooking appliance 2000.

In operation S920, the processor 1400 of the wireless power transmission device 1000 according to an embodiment of the disclosure may determine a limited frequency corresponding to the identification information, based on the transmission frequency information 1610.

The limited frequency may be a minimum frequency value of power being transmitted from the wireless power transmission device 1000. The transmission frequency information 1610 may include limited frequency values respectively for a plurality of cooking appliances. Each of the plurality of cooking appliances may include various types. The processor 1400 may determine a type of the cooking appliance 2000, based on the received identification information. The processor 1400 may check whether information about the cooking appliance 2000 with the determined type is included in the transmission frequency information 1610. When the information about the cooking appliance 2000 with the determined type is included in the transmission frequency information 1610, the processor 1400 may determine the limited frequency as a limited frequency value included in the transmission frequency information 1610 so as to correspond to the cooking appliance 2000.

In an embodiment of the disclosure, the processor 1400 may load the transmission frequency information 1610 stored in the memory 1600. The transmission frequency information 1610 may include a table in which identification information of each of the plurality of cooking appliances matches shape information of a load of each of the plurality of cooking appliances. The processor 1400 may receive the identification information (e.g., a model name) of the cooking appliance 2000, and then may determine a type of a load of the cooking appliance 2000, based on the matching table included in the transmission frequency information 1610.

In operation S930, the processor 1400 of the wireless power transmission device 1000 according to an embodiment of the disclosure may set an operation frequency range of first power being transmitted to the cooking appliance 2000 in a low-load state in which an operation of a main load of the cooking appliance 2000 is stopped, based on the limited frequency. The main load of the cooking appliance 2000 may be a load that is related to at least one of a heating operation or a cooking operation of the cooking appliance 2000 and is among the load 2004 of the cooking appliance 2000. For example, the main load may be a heater or a motor, but the disclosure is not limited thereto. The low-load state may be a state in which an operation of the main load of the cooking appliance 2000 is stopped, and thus, power transmission to the main load of the cooking appliance 2000 is unnecessary. For example, the low-load state may be a state in which power is transmitted to the communication interface 2030 of the cooking appliance 2000, and thus, a wireless communication signal is transmitted/received to/from the cooking appliance 2000.

In an embodiment of the disclosure, in the low-load state, the processor 1400 may set the operation frequency range of the first power being transmitted to the cooking appliance 2000 to be equal to or greater than the limited frequency. The processor 1400 may set a minimum value of an operation frequency of the first power to be the limited frequency in the low-load state. The processor 1400 may limit the operation frequency range of the first power to be equal to or greater than the limited frequency.

If the wireless power transmission device 1000 does not power control via frequency limitation, when a main load (e.g., a heater or a motor) of the induced voltage load device 2000-2 stops its operation, an input voltage to the induced voltage load device 2000-2 in a low-load operation state may unnecessarily increase such that damage to a device may occur. The processor 1400 of the wireless power transmission device 1000 according to an embodiment of the disclosure may limit a frequency minimum value of power transmitted by the wireless power transmission device 1000 in the low-load operation state to be a limited frequency. Accordingly, the processor 1400 may set, based on the limited frequency, the operation frequency range in the low-load state in which an operation of the main load of the cooking appliance 2000 is stopped, and thus, may prevent damage to a device included in the load 2004 of the cooking appliance 2000. Also, the processor 1400 may limit the operation frequency range in the low-load state to be higher than the limited frequency, thereby decreasing loss of the first power transmitted from the wireless power transmission device 1000 to the cooking appliance 2000 and increasing transmission efficiency of the first power transmitted from the wireless power transmission device 1000 to the cooking appliance 2000.

That the processor 1400 of the wireless power transmission device 1000 disclosed in the disclosure limits a frequency of the first power transmitted to the cooking appliance 2000 is different from an operation of controlling a frequency according to a target power level. The processor 1400 disclosed in the disclosure may limit the operation frequency range to be equal to or greater than the limited frequency value while the target power level is maintained. Accordingly, the wireless power transmission device 1000 may not be able to output power corresponding to the target power level. In order for the wireless power transmission device 1000 to output power with a level most similar to the target power level, the operation frequency range may be fixed to the limited frequency value. Accordingly, the wireless power transmission device 1000 may fix the operation frequency to the limited frequency, thereby obtaining an effect of constantly maintaining an output level of the first power.

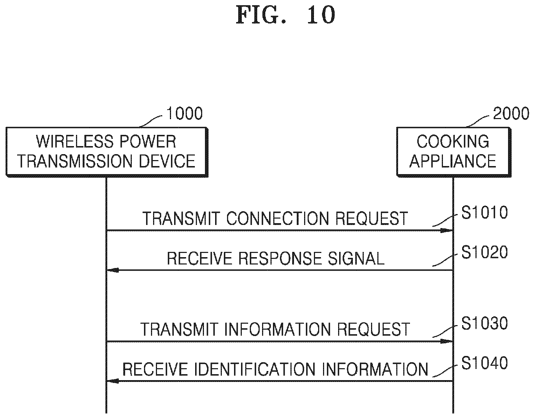

Hereinafter, an operation in which the wireless power transmission device 1000 receives identification information from the cooking appliance 2000 will now be described with reference to FIG. 10.

FIG. 10 is a flowchart illustrating a method by which the wireless power transmission device 1000 receives identification information, according to an embodiment of the disclosure.

In operation S1010, the wireless power transmission device 1000 according to an embodiment of the disclosure may transmit a connection request to the cooking appliance 2000. The processor 1400 of the wireless power transmission device 1000 may control the communication interface 1200 to request the cooking appliance 2000 for establishment of a wireless communication connection to the cooking appliance 2000. For example, the processor 1400 may control the communication interface 1200 to transmit a connection request signal to the cooking appliance 2000.

In operation S1020, the wireless power transmission device 1000 according to an embodiment of the disclosure may receive a response signal from the cooking appliance 2000. The cooking appliance 2000 may generate and transmit the response signal, in response to the connection request. The processor 1400 of the wireless power transmission device 1000 may control the communication interface 1200 to receive the response signal transmitted from the cooking appliance 2000. The response signal may include connection information necessary for establishment of a wireless communication connection. The processor 1400 may establish the wireless communication connection to the cooking appliance 2000, based on the connection information.

In operation S1030, the wireless power transmission device 1000 according to an embodiment of the disclosure may transmit an information request to the cooking appliance 2000. The processor 1400 of the wireless power transmission device 1000 may control the communication interface 1200 to transmit the information request requesting identification information to the cooking appliance 2000.

In operation S1040, the wireless power transmission device 1000 according to an embodiment of the disclosure may receive the identification information from the cooking appliance 2000. The processor 1400 of the wireless power transmission device 1000 may control the communication interface 1200 to receive the identification information from the cooking appliance 2000. The processor 1400 may determine a limited frequency corresponding to the identification information, based on the transmission frequency information 1610 stored in the memory 1600.

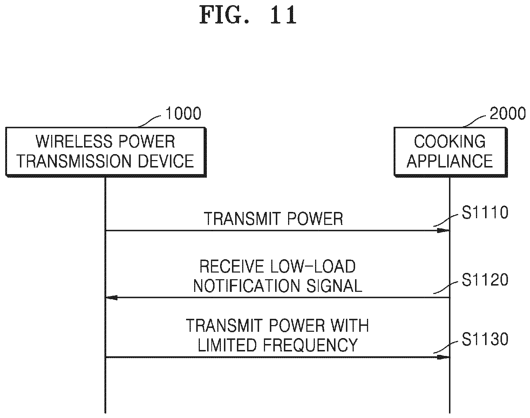

Hereinafter, an operation in which the wireless power transmission device 1000 transmits power to the cooking appliance 2000 will now be described with reference to FIG. 11.

FIG. 11 is a flowchart illustrating a method by which the wireless power transmission device 1000 transmits power, according to an embodiment of the disclosure.

In operation S1110, the wireless power transmission device 1000 according to an embodiment of the disclosure may transmit power to the cooking appliance 2000. The processor 1400 of the wireless power transmission device 1000 may control the wireless power transmitter 1100 to transmit power to the cooking appliance 2000. The processor 1400 may control the wireless power transmitter 1100 to transmit high power to an external wall of the cooking appliance 2000 or the load 2004 of the cooking appliance 2000. The high power may be power transmitted to the cooking appliance 2000 in a normal state in which a main load of the cooking appliance 2000 is operated. The processor 1400 may set a transmission frequency of the high power to be equal to or greater than a threshold frequency. The threshold frequency may be a threshold value for preventing damage to the cooking appliance 2000.

In operation S1120, the wireless power transmission device 1000 according to an embodiment of the disclosure may receive a low-load notification signal from the cooking appliance 2000. The cooking appliance 2000 may detect that the main load of the cooking appliance 2000 is stopped. In response to the main load stopping its operation, the cooking appliance 2000 may generate and transmit the low-load notification signal to the wireless power transmission device 1000. The processor 1400 of the wireless power transmission device 1000 may control the communication interface 1200 to receive the low-load notification signal from the cooking appliance 2000. The processor 1400 may identify that the cooking appliance 2000 is in a low-load state. When it is the low-load state, the processor 1400 may set an operation frequency range of small power being transmitted to the cooking appliance 2000, based on a limited frequency. For example, the processor 1400 may set the operation frequency range of small power to be equal to or greater than the limited frequency. For example, the small power may be power for driving the communication interface 2030 of the cooking appliance 2000 so as to maintain a wireless communication connection to the wireless power transmission device 1000.

In operation S1130, the wireless power transmission device 1000 according to an embodiment of the disclosure may transmit power with the limited frequency to the cooking appliance 2000. The limited frequency may be a minimum value in the set operation frequency range. The limited frequency may have a value higher than the threshold frequency. When the cooking appliance 2000 is in the low-load state, the processor 1400 of the wireless power transmission device 1000 may change the minimum value of the set operation frequency range from the threshold frequency to the limited frequency. The processor 1400 may control the wireless power transmitter 1100 to transmit the small power with the limited frequency. Accordingly, the processor 1400 may decrease an amount of power being lost when small power is transmitted from the wireless power transmission device 1000 to the cooking appliance 2000.

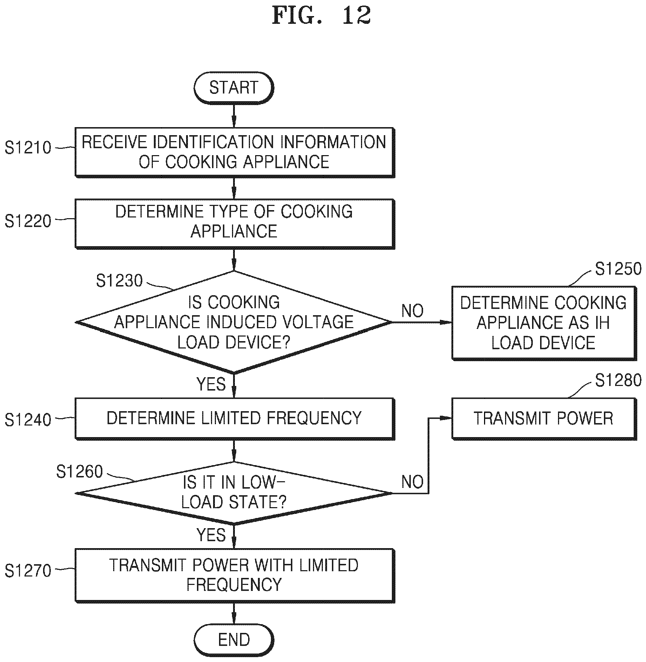

Hereinafter, a detailed method by which the wireless power transmission device 1000 transmits power to the cooking appliance 2000 will now be described with reference to FIG. 12.

FIG. 12 is a flowchart illustrating a method by which the wireless power transmission device 1000 transmits power, according to an embodiment of the disclosure.

In operation S1210, the wireless power transmission device 1000 according to an embodiment of the disclosure may receive identification information of the cooking appliance 2000. The processor 1400 of the wireless power transmission device 1000 may control the communication interface 1200 to establish a wireless communication connection to the cooking appliance 2000. The processor 1400 may control the communication interface 1200 to transmit an information request to the cooking appliance 2000. The processor 1400 may control the communication interface 1200 to receive the identification information from the cooking appliance 2000.

In operation S1220, the wireless power transmission device 1000 according to an embodiment of the disclosure may determine a type of the cooking appliance 2000. The identification information may include information related to the type of the cooking appliance 2000. For example, the identification information may include at least one of a MAC address, a model name, load device type information (e.g., IH type ID, heater type ID, motor type ID, or small appliance type ID), manufacturer information (e.g., manufacturer ID), a serial number, or manufacture time information (e.g., date of production). For example, the load device type information may include information indicating whether the cooking appliance 2000 is the IH load device (IH type ID) 2000-1, the induced voltage load device (heater type ID) 2000-2 including a heater, or the induced voltage load device (motor type ID) 2000-2 including a motor. The processor 1400 of the wireless power transmission device 1000 may determine the type of the cooking appliance 2000, based on the received identification information. For example, the processor 1400 may determine whether the cooking appliance 2000 is the IH load device 2000-1 or the induced voltage load device 2000-2, based on the load device type information included in the received identification information.

In operation S1230, the wireless power transmission device 1000 according to an embodiment of the disclosure may determine whether the cooking appliance 2000 is the induced voltage load device 2000-2. The processor 1400 of the wireless power transmission device 1000 may determine whether the type of the cooking appliance 2000 which is determined based on the received identification information is the induced voltage load device 2000-2. When the cooking appliance 2000 is the induced voltage load device 2000-2 (operation S1230 - YES), the processor 1400 may proceed to operation S1240. When the cooking appliance 2000 is not the induced voltage load device 2000-2 (operation S1230 - NO), the processor 1400 may proceed to operation S1250.

In operation S1240, the wireless power transmission device 1000 according to an embodiment of the disclosure may determine a limited frequency. When the cooking appliance 2000 is the induced voltage load device 2000-2, the processor 1400 of the wireless power transmission device 1000 may load the transmission frequency information 1610 from the memory 1600. The transmission frequency information 1610 may include limited frequency values for each type of each of the cooking appliances 2000. The processor 1400 of the wireless power transmission device 1000 may determine a limited frequency corresponding to a type of the cooking appliance 2000 which is determined based on the transmission frequency information 1610. Afterward, the processor 1400 may proceed to operation S1260.

In operation S1250, the wireless power transmission device 1000 according to an embodiment of the disclosure may determine the cooking appliance 2000 as the IH load device 2000-1. When the cooking appliance 2000 is not the induced voltage load device 2000-2, the processor 1400 of the wireless power transmission device 1000 may determine the cooking appliance 2000 as the IH load device 2000-1. Afterward, the processor 1400 may proceed to operation S1280.

In operation S1260, the wireless power transmission device 1000 according to an embodiment of the disclosure may determine whether it is in a low-load state. The cooking appliance 2000 may enter the low-load state in which a main load related to heating and cooking operations stops operating. For example, the cooking appliance 2000 may enter the low-load state in which the cooking appliance 2000 drives only the communication interface 2030 for a wireless communication connection to the wireless power transmission device 1000. When entering the low-load state, the cooking appliance 2000 may transmit a low-load notification signal to the wireless power transmission device 1000. The processor 1400 of the wireless power transmission device 1000 may determine whether the low-load notification signal is received from the cooking appliance 2000. When receiving the low-load notification signal, the processor 1400 may determine that the cooking appliance 2000 is in the low-load state. When the cooking appliance 2000 is in the low-load state (operation S1260 - YES), the processor 1400 may proceed to operation S1270. When it is a normal operation state in which the main load of the cooking appliance 2000 operates (operation S1260 - NO), the processor 1400 may proceed to operation S1280.

In operation S1270, the wireless power transmission device 1000 according to an embodiment of the disclosure may transmit power with the limited frequency. The processor 1400 of the wireless power transmission device 1000 may set, as the limited frequency, a minimum value of an operation frequency range of power being transmitted to the induced voltage load device 2000-2 in the low-load state. The limited frequency may have a value higher than a threshold frequency for preventing damage to the cooking appliance 2000. The processor 1400 may control the wireless power transmitter 1100 to transmit power with the limited frequency.

In operation S1280, the wireless power transmission device 1000 according to an embodiment of the disclosure may transmit power. The processor 1400 of the wireless power transmission device 1000 may control the wireless power transmitter 1100 to transmit, the IH load device 2000-1, power in an operation frequency range irrelevant to the limited frequency. The processor 1400 may control the wireless power transmitter 1100 to transmit power in an operation frequency range irrelevant to the limited frequency, to the induced voltage load device 2000-2 in a normal operation state. For example, the processor 1400 may control the wireless power transmitter 1100 to transmit power with the threshold frequency for preventing damage to the cooking appliance 2000.

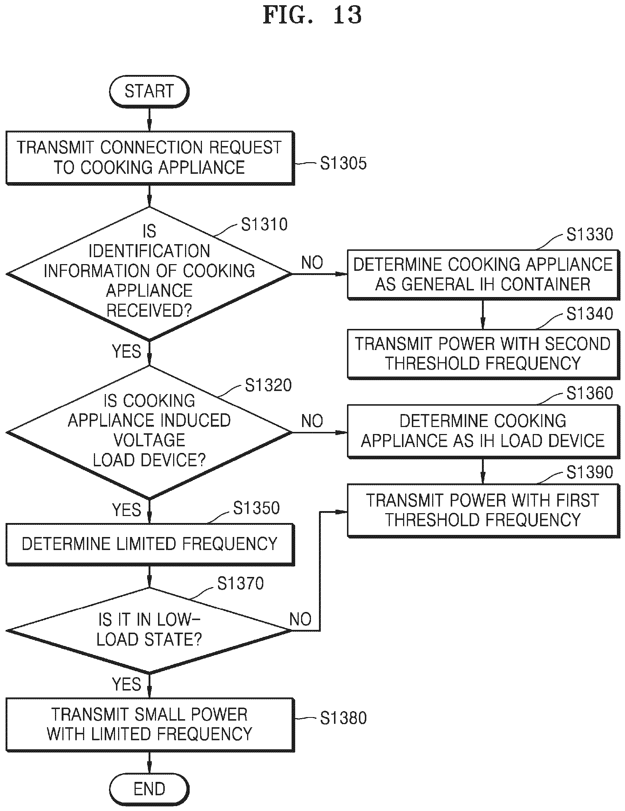

Hereinafter, a detailed method by which the wireless power transmission device 1000 transmits power to the cooking appliance 2000, based on whether identification information being received, will now be described with reference to FIG. 13.

FIG. 13 is a flowchart illustrating a method by which the wireless power transmission device 1000 transmits power, according to an embodiment of the disclosure.

In operation S1305, the wireless power transmission device 1000 according to an embodiment of the disclosure may transmit a connection request to the cooking appliance 2000. The processor 1400 of the wireless power transmission device 1000 may control the communication interface 1200 to establish a wireless communication connection to the cooking appliance 2000. For example, the processor 1400 may control the communication interface 1200 to transmit a connection request to the cooking appliance 2000, thereby establishing a wireless communication connection to the cooking appliance 2000. The processor 1400 may control the communication interface 1200 to transmit an information request requesting the cooking appliance 2000 to provide identification information.

In operation S1310, the wireless power transmission device 1000 according to an embodiment of the disclosure may check whether the identification information of the cooking appliance 2000 is received. The processor 1400 of the wireless power transmission device 1000 may control the communication interface 1200 to receive the identification information from the cooking appliance 2000. When the identification information of the cooking appliance 2000 is received (operation S1310 - YES), the processor 1400 may proceed to operation S1320. When the identification information of the cooking appliance 2000 is not received (operation S1310 - NO), the processor 1400 may proceed to operation S1330.

In operation S1320, the wireless power transmission device 1000 according to an embodiment of the disclosure may determine whether the cooking appliance 2000 is the induced voltage load device 2000-2. The processor 1400 of the wireless power transmission device 1000 may determine a type of the cooking appliance 2000, based on the received identification information. The identification information may include information related to the type of the cooking appliance 2000. For example, the identification information may include information indicating whether the cooking appliance 2000 is the IH load device (IH type ID) 2000-1, the induced voltage load device (heater type ID) 2000-2 including a heater, or the induced voltage load device (motor type ID) 2000-2 including a motor. The processor 1400 may determine whether the cooking appliance 2000 is the induced voltage load device 2000-2, based on the received identification information. When the cooking appliance 2000 is the induced voltage load device 2000-2 (operation S1320 - YES), the processor 1400 may proceed to operation S1350. When the cooking appliance 2000 is not the induced voltage load device 2000-2 (operation S1320 - NO), the processor 1400 may proceed to operation S1360.

In operation S1330, the wireless power transmission device 1000 according to an embodiment of the disclosure may determine the cooking appliance 2000 as the general IH container 20. When the identification information of the cooking appliance 2000 is not received, the processor 1400 of the wireless power transmission device 1000 may determine that the cooking appliance 2000 is the general IH container 20 that does not include the communication interface 2030. Afterward, the processor 1400 may proceed to operation S1340.

In operation S1340, the wireless power transmission device 1000 according to an embodiment of the disclosure may transmit power with a second threshold frequency. The second threshold frequency may have a value lower than a limited frequency. The second threshold frequency may have a value lower than a first threshold frequency. The processor 1400 of the wireless power transmission device 1000 may set an operation frequency range of power being transmitted to the general IH container 20 to be lower than an operation frequency range of power being transmitted to the cooking appliance 2000. For example, the processor 1400 may set a minimum value of the operation frequency range of power being transmitted to the general IH container 20 to be lower than a minimum value of the operation frequency range of power being transmitted to the cooking appliance 2000. As the general IH container 20 has small risk of damage and does not perform a low-load operation, there is a small necessity to limit an operation frequency range for the general IH container 20, compared to the cooking appliance 2000. The processor 1400 may set a minimum limit value of the operation frequency range of power being transmitted to the general IH container 20 to be a value lower than a limit of the operation frequency range for the cooking appliance 2000.

In operation S1350, the wireless power transmission device 1000 according to an embodiment of the disclosure may determine the limited frequency. When the cooking appliance 2000 is the induced voltage load device 2000-2, the processor 1400 of the wireless power transmission device 1000 may load the transmission frequency information 1610 from the memory 1600. The transmission frequency information 1610 may include limited frequency values for each type of each of the cooking appliances 2000. The processor 1400 of the wireless power transmission device 1000 may determine a limited frequency corresponding to a type of the cooking appliance 2000 which is determined based on the transmission frequency information 1610. Afterward, the processor 1400 may proceed to operation S1370.

In operation S1360, the wireless power transmission device 1000 according to an embodiment of the disclosure may determine the cooking appliance 2000 as the IH load device 2000-1. When the cooking appliance 2000 is not the induced voltage load device 2000-2, the processor 1400 of the wireless power transmission device 1000 may determine the cooking appliance 2000 as the IH load device 2000-1. Afterward, the processor 1400 may proceed to operation S1390.

In operation S1370, the wireless power transmission device 1000 according to an embodiment of the disclosure may determine whether it is in a low-load state. The cooking appliance 2000 may enter the low-load state in which a main load related to heating and cooking operations stops operating. For example, the cooking appliance 2000 may enter the low-load state in which the cooking appliance 2000 drives only the communication interface 2030 for a wireless communication connection to the wireless power transmission device 1000. When entering the low-load state, the cooking appliance 2000 may transmit a low-load notification signal to the wireless power transmission device 1000. The processor 1400 of the wireless power transmission device 1000 may determine whether the low-load notification signal is received from the cooking appliance 2000. When receiving the low-load notification signal, the processor 1400 may determine that the cooking appliance 2000 is in the low-load state. When the cooking appliance 2000 is in the low-load state (operation S1370 - YES), the processor 1400 may proceed to operation S1380. When it is a normal operation state in which the main load of the cooking appliance 2000 operates (operation S1370 - NO), the processor 1400 may proceed to operation S1390.

In operation S1380, the wireless power transmission device 1000 according to an embodiment of the disclosure may transmit small power with the limited frequency. The small power may be power for driving the communication interface 2030 of the cooking appliance 2000 so as to maintain a wireless communication connection-established state with respect to the cooking appliance 2000. The processor 1400 of the wireless power transmission device 1000 may set, as the limited frequency, a minimum value of an operation frequency range of the small power being transmitted to the induced voltage load device 2000-2 in the low-load state. The limited frequency may have a value higher than the first threshold frequency. The limited frequency may have a value higher than the second threshold frequency The processor 1400 may control the wireless power transmitter 1100 to transmit power with the limited frequency.

In operation S1390, the wireless power transmission device 1000 may transmit power with the first threshold frequency. The first threshold frequency may be a frequency value for preventing damage to the load 2004 of the IH load device 2000-1. The first threshold frequency may have a value lower than the limited frequency. The first threshold frequency may have a value higher than the second threshold frequency. The processor 1400 of the wireless power transmission device 1000 may control the wireless power transmitter 1100 to transmit power with the first threshold frequency to the IH load device 2000-1. The processor 1400 may control the wireless power transmitter 1100 to transmit power with the first threshold frequency to the induced voltage load device 2000-2 in a normal operation state.

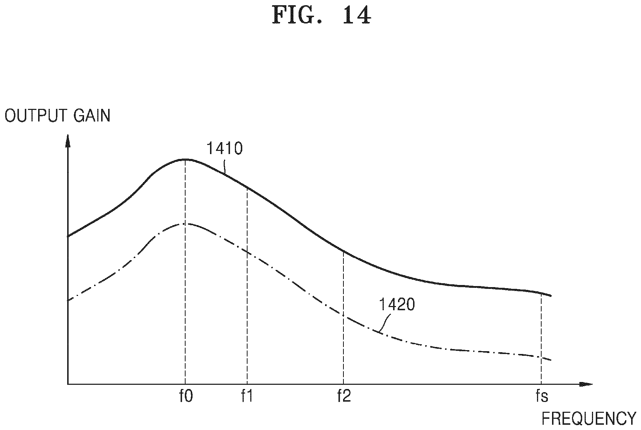

Hereinafter, an output gain according to a frequency of power transmitted from the wireless power transmission device 1000 will now be described with reference to FIG. 14.

FIG. 14 is a graph showing an output gain according to a frequency of first power transmitted from the wireless power transmission device 1000, according to an embodiment of the disclosure.

In an embodiment of the disclosure, the first power may be power being transmitted from the wireless power transmission device 1000 to the cooking appliance 2000. FIG. 14 illustrates a first output gain 1410 in a normal operation state in which a main load of the cooking appliance 2000 is turned on and thus operates, and a second output gain 1420 in a low-load state in which the main load of the cooking appliance 2000 is turned off and thus stop operating. In the normal operation state, high power necessary for an operation of the main load of the cooking appliance 2000 may be transmitted from the wireless power transmission device 1000 to the cooking appliance 2000. In the low-load state, small power necessary for operations of sensors, the communication interface 2030, and the controller 2020 of the cooking appliance 2000 may be transmitted.

In an embodiment of the disclosure, a resonance frequency f0 may be a frequency value set according to an inductance value and a capacitance value of an output interface of the wireless power transmitter 1100 of the wireless power transmission device 1000. The inductance value and the capacitance value may be determined by the receiving coil 2003 of the cooking appliance 2000. When the wireless power transmission device 1000 transmits the first power with the resonance frequency f0, an output gain may be maximal. The more a frequency of the first power transmitted from the wireless power transmission device 1000 is far from the resonance frequency f0, the more the output gain may be gradually decreased.

In an embodiment of the disclosure, the wireless power transmission device 1000 may operate in a frequency domain higher than the resonance frequency f0. An operation frequency domain of the wireless power transmission device 1000 may be set from among frequency domains higher than the resonance frequency f0.

In an embodiment of the disclosure, the wireless power transmission device 1000 may start frequency control at a start frequency fs. The start frequency fs may be a frequency value at which the processor 1400 of the wireless power transmission device 1000 starts setting the operation frequency domain. The processor 1400 may set the start frequency fs to be a maximum value of the operation frequency domain. The processor 1400 may specify the operation frequency domain while decreasing a frequency value from the start frequency fs. For example, the processor 1400 may specify the maximum value of the operation frequency domain as the start frequency fs, and may start. The processor 1400 may calculate a target output gain according to a frequency while decreasing the frequency from the start frequency fs to a low value.

In an embodiment of the disclosure, in the normal operation state in which the main load of the cooking appliance 2000 is turned on and thus operates, the wireless power transmission device 1000 may set a threshold frequency f1 to be a minimum value of an operation frequency domain in which the first power is transmitted. The processor 1400 of the wireless power transmission device 1000 may identify that the cooking appliance 2000 is in the normal operation state. The processor 1400 may set the threshold frequency f1 to be a minimum value of an operation frequency domain of power transmitted to the cooking appliance 2000 in the normal operation state. For example, when the wireless power transmission device 1000 operates, the threshold frequency f1 may be a default frequency limit value. For example, the threshold frequency f1 may be a frequency limit value that is applied regardless of whether the cooking appliance 2000 in the normal operation state to which the wireless power transmission device 1000 transmits the first power is the induced voltage load device 2000-2 or the IH load device 2000-1. In a case where the wireless power transmission device 1000 limits the operation frequency domain to be equal to or greater than the threshold frequency f1 when the wireless power transmission device 1000 operates, the wireless power transmission device 1000 may limit an amount of voltage and power flowing in the wireless power transmission device 1000 to be equal to or smaller than a specific level, thereby preventing damage to parts of the wireless power transmission device 1000 due to overvoltage and/or overpower.

In an embodiment of the disclosure, in the low-load state in which the main load of the cooking appliance 2000 is turned off and thus stop operating, the wireless power transmission device 1000 may set a limited frequency f2 to be the minimum value of the operation frequency domain in which the first power is transmitted. The processor 1400 of the wireless power transmission device 1000 may identify that the cooking appliance 2000 is in the low-load state. In the low-load state, even when an output gain is lower than a target output gain, the processor 1400 may set the limited frequency f2 to be a minimum value of the operation frequency domain of power transmitted to the cooking appliance 2000 in the low-load state. The limited frequency f2 may be a frequency limit value of a case where, when the wireless power transmission device 1000 operates, a type of the cooking appliance 2000 is the induced voltage load device 2000-2 having the load 2004 such as a motor or a heater, and a state of the load 2004 is the low-load state in which an operation of a main load is stopped. The limited frequency f2 may have a value higher than the threshold frequency f1. When the limited frequency f2 is set to be the minimum value of the operation frequency domain, the wireless power transmission device 1000 may operate in a frequency range that is further limited, compared to a case where the threshold frequency f1 is set to be the minimum value of the operation frequency domain.

In an embodiment of the disclosure, an output gain graph may vary according to a relation between the wireless power transmission device 1000 and the cooking appliance 2000, characteristics of the wireless power transmission device 1000, and characteristics of the cooking appliance 2000. In particular, when the cooking appliance 2000 is the induced voltage load device 2000-2, the output gain graph may vary according to whether a state of the induced voltage load device 2000-2 is the normal operation state or a low-load operation state. Accordingly, the first output gain 1410 in the normal operation state and the second output gain 1420 in the low-load state may have different characteristics and different values. The processor 1400 of the wireless power transmission device 1000 may set the limited frequency f2 to be the minimum value of the operation frequency domain in the low-load operation state, unlike in the normal operation state, so as to prevent damage to a device of the induced voltage load device 2000-2 due to overvoltage.

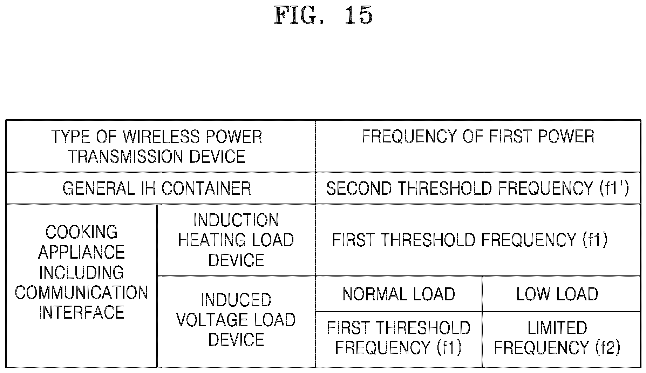

Hereinafter, a method of setting a frequency of first power according to a type of a wireless power transmission device will now be described with reference to FIG. 15.

FIG. 15 is a table of frequencies of first power being transmitted from the wireless power transmission device 1000 according to types of a wireless power reception device, according to an embodiment of the disclosure. The cooking appliance 2000 of the disclosure may be referred to as the wireless power reception device configured to receive first power being transmitted from the wireless power transmission device 1000.

The wireless power reception device may include the general IH container 20, and the cooking appliance 2000 including the communication interface 2030. The cooking appliance 2000 including the communication interface 2030 may include the IH load device 2000-1 and the induced voltage load device 2000-2.

When the wireless power reception device is the general IH container 20, the processor 1400 of the wireless power transmission device 1000 may set a frequency of the first power as a second threshold frequency f1'. The general IH container 20 may receive power from the wireless power transmission device 1000. For example, the general IH container 20 may be heated by power received from the wireless power transmitter 1100 of the wireless power transmission device 1000. The general IH container 20 may not separately include a pickup coil, a communication interface, and a controller. The second threshold frequency f1' may be a frequency for preventing damage to the general IH container 20. The second threshold frequency f1' may have a value lower than a limited frequency f2. The second threshold frequency f1' may have a value lower than a first threshold frequency f1**.** When the wireless power reception device is the general IH container 20, the processor 1400 may minimize a frequency limit and set a frequency of the first power to be the second threshold frequency f1'.

When the wireless power reception device is the IH load device 2000-1, the processor 1400 of the wireless power transmission device 1000 may set a frequency of the first power to be the first threshold frequency f1**.** The IH load device 2000-1 may include the pickup coil 2001, the communication interface 2030, and the controller 2020. The first threshold frequency f1 may be a frequency for preventing overvoltage from being induced to the pickup coil 2001 of the IH load device 2000-1. The first threshold frequency f1 may have a value lower than the limited frequency f2. The first threshold frequency f1 may have the value higher than the second threshold frequency f1'. When the wireless power reception device is the IH load device 2000-1, the processor 1400 may set the frequency of the first power as the first threshold frequency f1 by limiting a minimum value of an operation frequency range to be a value higher than that of the general IH container 20.

When the wireless power reception device is the induced voltage load device 2000-2 and is in a normal operation state in which a main load operates, the processor 1400 of the wireless power transmission device 1000 may set the frequency of the first power as the first threshold frequency f1**.** The induced voltage load device 2000-2 may include the pickup coil 2001, the communication interface 2030, and the controller 2020. The first threshold frequency f1 may be a frequency for preventing overvoltage from being induced to the pickup coil 2001 of the induced voltage load device 2000-2. The first threshold frequency f1 may have a value lower than the limited frequency f2. The first threshold frequency f1 may have the value higher than the second threshold frequency f1'. When the wireless power reception device is the induced voltage load device 2000-2 and is in the normal operation state in which the main load operates, the processor 1400 may set the frequency of the first power as the first threshold frequency f1 by limiting the minimum value of the operation frequency range to be a value higher than that of the general IH container 20.

When the wireless power reception device is the induced voltage load device 2000-2 and in a low-load state in which an operation of the main load is stopped, the processor 1400 of the wireless power transmission device 1000 may set the frequency of the first power as the limited frequency f2. The induced voltage load device 2000-2 may include the pickup coil 2001, the communication interface 2030, and the controller 2020. The limited frequency f2 may be a frequency for preventing overvoltage from being induced to the communication interface 2030 and the controller 2020. The limited frequency f2 may have a value higher than the second threshold frequency f1'. The limited frequency f2 may have the value higher than the first threshold frequency f1. When the wireless power reception device is the induced voltage load device 2000-2 and in the low-load state in which an operation of the main load is stopped, the processor 1400 may set the frequency of the first power as the limited frequency f2 by limiting the minimum value of the operation frequency range to be a value higher than those of the IH load device 2000-1 and a general load.

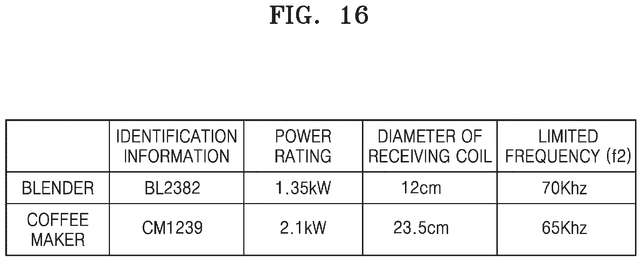

Hereinafter, the transmission frequency information 1610 stored in the memory 1600 will now be described with reference to FIG. 16.

FIG. 16 is a table showing the transmission frequency information 1610 according to an embodiment of the disclosure.

The memory 1600 of the wireless power transmission device 1000 may store the transmission frequency information 1610. The transmission frequency information 1610 may include a table in which values of a limited frequency f2 are respectively matched with a plurality of cooking appliances. For example, the transmission frequency information 1610 may include a table in which identification information of each of the plurality of cooking appliances, a power rating of each of the plurality of cooking appliances, a diameter of the receiving coil 2003 of each of the plurality of cooking appliances, and the limited frequency f2 of each of the plurality of cooking appliances are matched in a table form. For example, the transmission frequency information 1610 may include a table in which identification information of a blender is matched with BL2382, a power rating of the blender is matched with 1.35kW, a diameter of the receiving coil 2003 of the blender is matched with 12cm, and the limited frequency f2 of the blender is matched with 70Khz. For example, the transmission frequency information 1610 may include a table in which identification information of a coffee maker is CM1239, a power rating of the coffee maker is matched with 2.1kW, a diameter of the receiving coil 2003 of the coffee maker is matched with 23.5cm, and the limited frequency f2 of the coffee maker is matched with 65Khz.

When the wireless power transmission device 1000 starts communication with the cooking appliance 2000, the processor 1400 of the wireless power transmission device 1000 may control the communication interface 1200 to receive identification information including model ID from the cooking appliance 2000. The processor 1400 may check whether the model ID of the received identification information is included in the transmission frequency information 1610. When the model ID of the received identification information is included in the transmission frequency information 1610, the processor 1400 may determine, based on a matching table included in the transmission frequency information 1610, a limited frequency of the cooking appliance 2000 as the limited frequency f2 with respect to the corresponding model ID of the matching table of the transmission frequency information 1610.

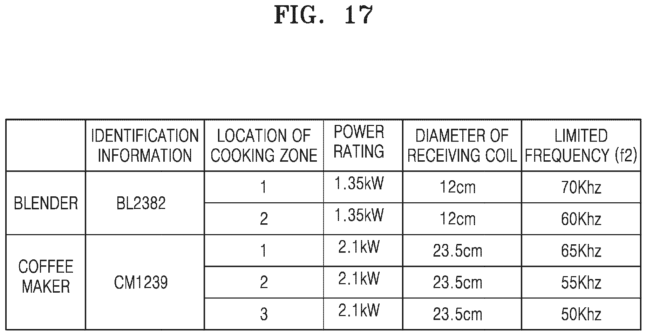

Hereinafter, a case in which the transmission frequency information 1610 stored in the memory 1600 is classified for each cooking zone 1700 will now be described with reference to FIG. 17.

FIG. 17 is a table showing the transmission frequency information 1610 according to an embodiment of the disclosure.

The wireless power transmission device 1000 may include the plurality of cooking zones 1700. The plurality of cooking zones 1700 may indicate a plurality of fuel intakes. A value of a limited frequency f2 may vary according to a characteristic of each of the plurality of cooking zones 1700 of the wireless power transmission device 1000. For example, the value of the limited frequency f2 may vary according to a size of the working coil 1120 provided at each of the plurality of cooking zones 1700 and the number of windings of the working coil 1120.

The processor 1400 of the wireless power transmission device 1000 may determine a limited frequency, in further consideration of information about the cooking zone 1700 in which the cooking appliance 2000 is located from among the plurality of cooking zones 1700. The memory 1600 of the wireless power transmission device 1000 may store the transmission frequency information 1610. When the wireless power transmission device 1000 includes the plurality of cooking zones 1700 having different characteristics, the transmission frequency information 1610 may include a table in which the limited frequency f2 of each of the plurality of cooking zones 1700 is matched in a table form. For example, the transmission frequency information 1610 may include a table in which respective locations of the plurality of cooking zones 1700 are classified, and the limited frequency f2 for each of the locations is matched in a table form. For example, the transmission frequency information 1610 may include a table in which identification information of a blender is matched with BL2382, a cooking zone location thereof is 1, a power rating of the blender is matched with 1.35kW, a diameter of the receiving coil 2003 of the blender is matched with 12cm, and the limited frequency f2 of the blender is matched with 70Khz. For example, the transmission frequency information 1610 may include a table in which identification information of a blender is matched with BL2382, a cooking zone location thereof is 2, a power rating of the blender is matched with 1.35kW, a diameter of the receiving coil 2003 of the blender is matched with 12cm, and the limited frequency f2 of the blender is matched with 60Khz.

When the wireless power transmission device 1000 starts communication with the cooking appliance 2000, the processor 1400 of the wireless power transmission device 1000 may control the communication interface 1200 to receive identification information including model ID and a location of the cooking zone 1700 from the cooking appliance 2000. The processor 1400 may check whether the model ID of the received identification information is included in the transmission frequency information 1610. When the model ID of the received identification information is included in the transmission frequency information 1610, the processor 1400 may determine, based on a matching table included in the transmission frequency information 1610, a limited frequency of the cooking appliance 2000 as the limited frequency f2 with respect to the corresponding model ID and the location of the cooking zone 1700 of the matching table of the transmission frequency information 1610.

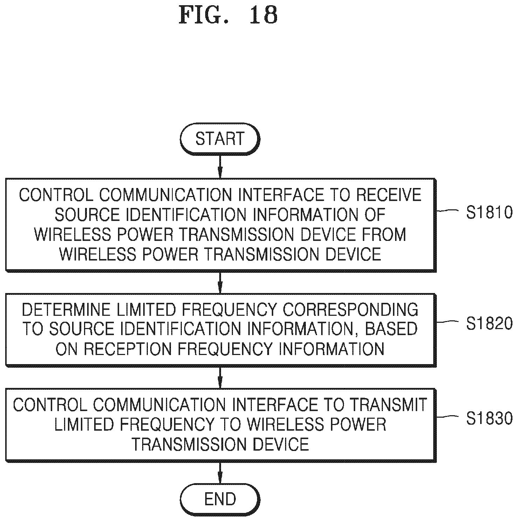

Not only the wireless power transmission device 1000 may determine the limited frequency f2 but also the cooking appliance 2000 may determine a limited frequency. Hereinafter, a method of determining the limited frequency f2 by controlling the cooking appliance 2000 will now be described with reference to FIG. 18.

FIG. 18 is a flowchart illustrating a method of controlling the cooking appliance 2000, according to an embodiment of the disclosure.

In operation S1810, the controller 2020 of the cooking appliance 2000 according to an embodiment of the disclosure may control the communication interface 2030 to receive source identification information of the wireless power transmission device 1000 from the wireless power transmission device 1000. The source identification information may include identification information of the wireless power transmission device 1000. The source identification information may include location information of the cooking zone 1700 of the wireless power transmission device 1000. The source identification information may include diameter information of a transmitting coil (e.g., the working coil 1120) of the wireless power transmission device 1000. That is, the source identification information may be identification information about a power source configured to transmit power to the cooking appliance 2000. The controller 2020 may control the communication interface 2030 to establish a wireless communication connection to the wireless power transmission device 1000 and receive the source identification information.

In operation S1820, the controller 2020 of the cooking appliance 2000 according to an embodiment of the disclosure may determine a limited frequency corresponding to the source identification information, based on the reception frequency information 2051. The memory 2050 of the cooking appliance 2000 may store the reception frequency information 2051. The reception frequency information 2051 may include frequency values respectively corresponding to the plurality of wireless power transmission devices 1000 having various types. The reception frequency information 2051 may include frequency values for respective locations of the plurality of cooking zones 1700 included in the wireless power transmission device 1000. The controller 2020 may load the reception frequency information 2051 from the memory 2050, and may check whether a type of the wireless power transmission device 1000 and a location of the cooking zone 1700 which are included in the source identification information are included in the reception frequency information 2051. When the type of the wireless power transmission device 1000 and the location of the cooking zone 1700 which are included in the source identification information are included in the reception frequency information 2051, the controller 2020 may determine a corresponding frequency value included in the reception frequency information 2051 as a limited frequency.

In operation S1830, the controller 2020 of the cooking appliance 2000 according to an embodiment of the disclosure may control the communication interface 2030 to transmit the limited frequency to the wireless power transmission device 1000. The controller 2020 may transmit the limited frequency to the wireless power transmission device 1000 by using the communication interface 2030 so as to allow the wireless power transmission device 1000 to transmit power with the limited frequency.

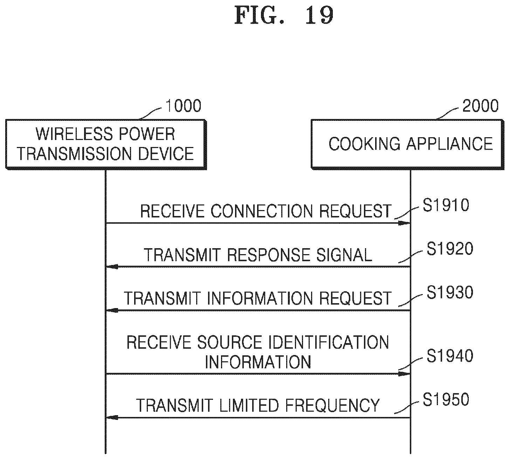

Hereinafter, a procedure in which the cooking appliance 2000 notifies a limited frequency to the wireless power transmission device 1000 will now be described with reference to FIG. 19.

FIG. 19 is a flowchart illustrating a method by which the cooking appliance 2000 transmits a limited frequency, according to an embodiment of the disclosure.

In operation S1910, the cooking appliance 2000 according to an embodiment of the disclosure may receive a connection request from the wireless power transmission device 1000. The connection request may be a request for establishing a wireless communication connection between the cooking appliance 2000 and the wireless power transmission device 1000. The controller 2020 of the cooking appliance 2000 may control the communication interface 2030 to receive the connection request from the wireless power transmission device 1000.

In operation S1920, the cooking appliance 2000 according to an embodiment of the disclosure may transmit a response signal to the wireless power transmission device 1000. The response signal may include a signal for approving the wireless communication connection, in response to the connection request. The response signal may include cooking zone location information indicating in which cooking zone 1700 from among the plurality of cooking zones 1700 of the wireless power transmission device 1000 the cooking appliance 2000 is located. The controller 2020 of the cooking appliance 2000 may control the communication interface 2030 to transmit the response signal to the wireless power transmission device 1000.

In operation S1930, the cooking appliance 2000 according to an embodiment of the disclosure may transmit an information request to the wireless power transmission device 1000. The information request may be a request requesting transmission of source identification information including a model name of the wireless power transmission device 1000. The controller 2020 of the cooking appliance 2000 may control the communication interface 2030 to transmit the information request to the wireless power transmission device 1000.

In operation S1940, the cooking appliance 2000 according to an embodiment of the disclosure may receive the source identification information from the wireless power transmission device 1000. The source identification information may include the model name of the wireless power transmission device 1000. The controller 2020 of the cooking appliance 2000 may control the communication interface 2030 to receive the source identification information from the wireless power transmission device 1000.

In operation S1950, the cooking appliance 2000 according to an embodiment of the disclosure may transmit a limited frequency to the wireless power transmission device 1000. The controller 2020 of the cooking appliance 2000 may check whether the wireless power transmission device 1000 corresponding to the model name included in the source identification information is included in the reception frequency information 2051. When the wireless power transmission device 1000 corresponding to the source identification information is included in the reception frequency information 2051, the controller 2020 may determine, as the limited frequency, a frequency value as the wireless power transmission device 1000 included in the reception frequency information 2051. The controller 2020 may control the communication interface 2030 to transmit the limited frequency to the wireless power transmission device 1000. Accordingly, the wireless power transmission device 1000 may set the limited frequency to be a frequency of power to be transmitted.

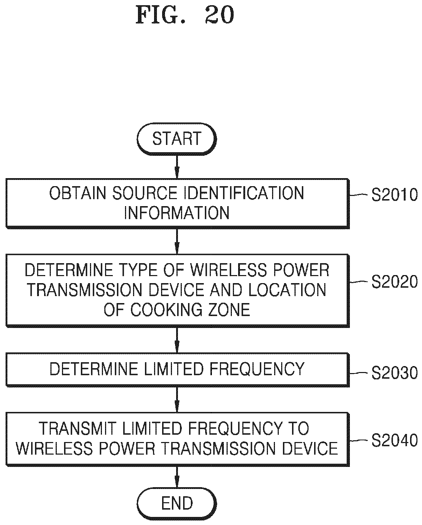

Hereinafter, a procedure in which the cooking appliance 2000 notifies a limited frequency to the wireless power transmission device 1000 will now be described with reference to FIG. 20.

FIG. 20 is a flowchart illustrating a method by which the cooking appliance 2000 transmits a limited frequency, according to an embodiment of the disclosure.

In operation S2010, the cooking appliance 2000 according to an embodiment of the disclosure may obtain source identification information. The source identification information may include a model name of the wireless power transmission device 1000, identification information of the wireless power transmission device 1000, and location information of the cooking zone 1700 of the wireless power transmission device 1000. The controller 2020 of the cooking appliance 2000 may control the communication interface 2030 to establish a wireless communication connection to the wireless power transmission device 1000. The controller 2020 may receive the identification information of the wireless power transmission device 1000 and the location information of the cooking zone 1700 included in the wireless power transmission device 1000.

In operation S2020, the cooking appliance 2000 according to an embodiment of the disclosure may determine a type of the wireless power transmission device 1000 and a location of the cooking zone 1700. The memory 2050 of the cooking appliance 2000 may store the reception frequency information 2051. The reception frequency information 2051 may include a limited frequency value for each type of the wireless power transmission device 1000. The reception frequency information 2051 may include a table in which limited frequency values according to respective locations of the plurality of cooking zones 1700 included in the wireless power transmission device 1000 are matched. The controller 2020 of the cooking appliance 2000 may identify a type of the wireless power transmission device 1000 and a location of the cooking zone 1700 which correspond to the source identification information received based on the reception frequency information 2051.

In operation S2030, the cooking appliance 2000 according to an embodiment of the disclosure may determine a limited frequency. The controller 2020 of the cooking appliance 2000 may determine a value of a limited frequency f2 in a low-load operation, based on the received source identification information and the stored reception frequency information 2051.

In operation S2040, the cooking appliance 2000 according to an embodiment of the disclosure may transmit the limited frequency f2 to the wireless power transmission device 1000. The controller 2020 of the cooking appliance 2000 may control the communication interface 2030 to transmit the value of limited frequency f2 to the wireless power transmission device 1000. Accordingly, the wireless power transmission device 1000 may set the value of the limited frequency f2 to be an operation frequency, thereby performing a frequency limit in wireless power transmission.

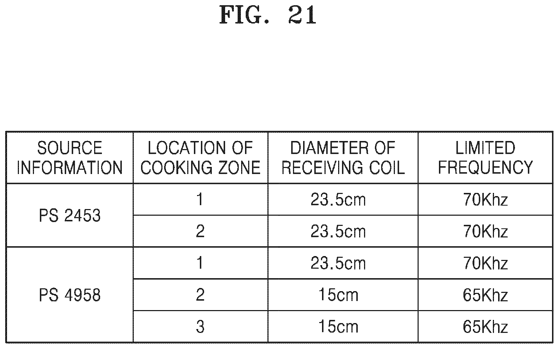

Hereinafter, the reception frequency information 2051 will now be described with reference to FIG. 21.

FIG. 21 is a table showing the reception frequency information 2051 according to an embodiment of the disclosure.

The memory 2050 of the cooking appliance 2000 may store the reception frequency information 2051. The reception frequency information 2051 may include a table in which, for each type of the wireless power transmission device 1000, diameter values of transmitting coils (e.g., the working coils 1120) according to respective locations of the cooking zones 1700 of the wireless power transmission device 1000 are matched in a table form. The reception frequency information 2051 may include a table in which, for each type of the wireless power transmission device 1000, limited frequency values according to respective locations of the cooking zones 1700 of the wireless power transmission device 1000 are matched in a table form. For example, the reception frequency information 2051 may include a table in which, when source information of the wireless power transmission device 1000 is PS2453 and a location of the cooking zone 1700 is 1, a diameter of the working coil 1120 is 23.5cm and a limited frequency f2 is 70Khz are matched. For example, the reception frequency information 2051 may include a table in which, when source information of the wireless power transmission device 1000 is PS4958 and a location of the cooking zone 1700 is 2, a diameter of the working coil 1120 is 15cm and a limited frequency f2 is 65Khz are matched.

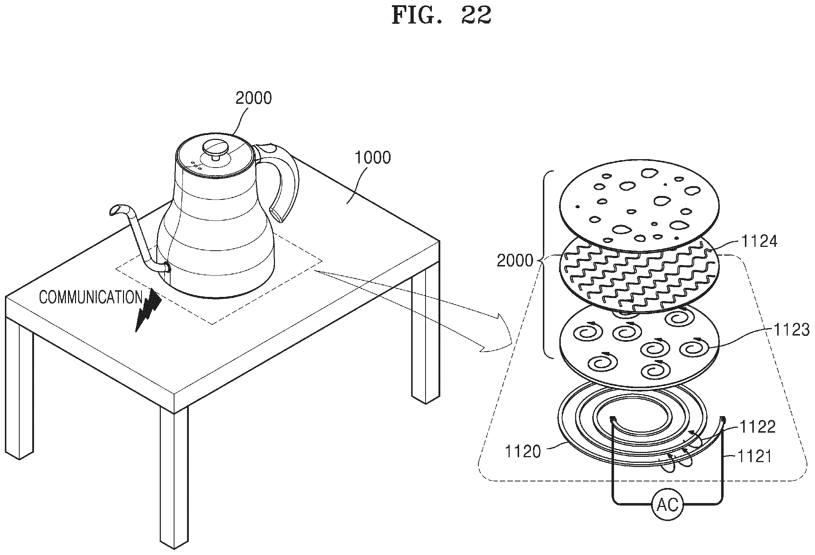

Referring to FIGS. 1 to 21, it is assumed that the wireless power transmission device 1000 is an induction range. However, the disclosure is not limited thereto, and the wireless power transmission device 1000 may be a smart table that generates an electromagnetic field by using a coil provided under the table. Hereinafter, a structure of the smart table will now be described in detail with reference to FIG. 22.

FIG. 22 is a diagram illustrating the wireless power transmission device 1000 according to an embodiment of the disclosure.

In an embodiment of the disclosure, the wireless power transmission device 1000 may be the smart table. The wireless power transmission device 1000 may include the working coil 1120. For example, the wireless power transmission device 1000 may allow an AC current 1121 to flow in the working coil 1120 so as to generate an electromagnetic field 1122, such that an eddy current 1123 may be generated in a bottom surface of the cooking appliance 2000. Heat is generated in a bottom surface of the cooking appliance 2000 due to resistance between the eddy current 1123 and IH metal (e.g., iron). Content 1124 in the cooking appliance 2000 may be heated by the generated heat. For example, when the cooking appliance 2000 includes the receiving coil 2003 and the load 2004, the wireless power transmission device 1000 may allow a magnetic field to be induced in the receiving coil 2003 so as to transmit power to the load 2004.

According to an embodiment of the disclosure, the wireless power transmission device 1000 may perform communication with the cooking appliance 2000 via the communication interface 1200. For example, the wireless power transmission device 1000 may transmit or receive information related to a current operation mode and a limited frequency to or from the cooking appliance 2000.

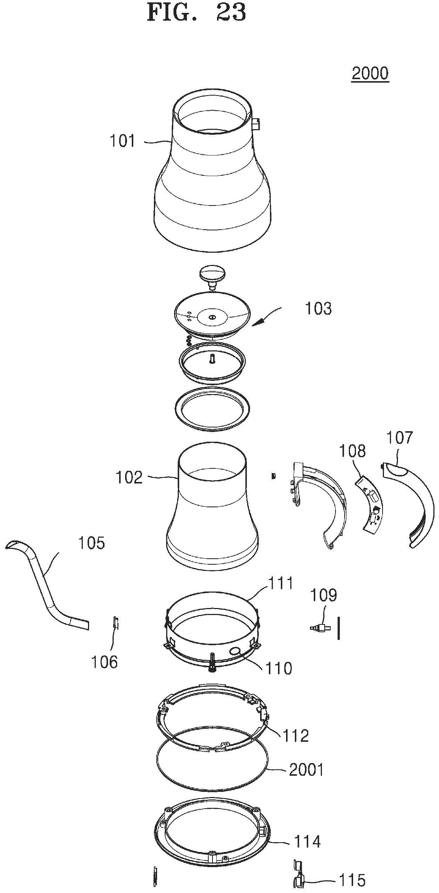

Hereinafter, a structure of a smart kettle will now be described in detail with reference to FIG. 23.

FIG. 23 is a diagram illustrating the cooking appliance 2000 according to an embodiment of the disclosure. The cooking appliance 2000 of FIG. 23 may be the IH load device 2000-1.

The cooking appliance 2000 according to an embodiment of the disclosure may include an outer container 101, an inner container 102, a lid 103, a water tank, a spout 105, a spout guide 106, a handle 107, a PCB 108, a water temperature sensor 109, an external-container temperature sensor 110, a case cover 111, a pickup coil cover 112, the pickup coil 2001, a bottom case 114, and a silicone leg 115. However, the cooking appliance 2000 is not limited thereto, and thus, may further include elements necessary for implementing the smart kettle.

The outer container 101 may be provided to surround side parts of the inner container 102. The inner container 102 may consist of an upper part and a lower part, and the upper part of the inner container 102 and the lower part of the inner container 102 may be formed of different materials. For example, the upper part of the inner container 102 may be formed of a nonmagnetic material, and the lower part of the inner container 102 may be formed of a magnetic material.

The lid 103 may be detachable with respect to the inner container 102. In a case where the smart kettle is operating in a warming mode, when the lid 103 covers the inner container 102, a temperature of content may be slowly decreased, and when the lid 103 does not cover the inner container 102, the temperature of the content may be rapidly decreased.

The water tank 104 may be a space for storing the content.

The spout 105 may be a tube for discharging the content in the water tank 104 to the outside. The spout 105 may be connected to the water tank 104 via the spout guide 106, and may be exposed to the outside through the outer container 101.

The handle 107 may be attached to the outer container 101. The handle 107 may include a waterproof member, thereby preventing water from penetrating into the handle 107. The PCB 108 may be provided in the handle 107.

The PCB 108 may correspond to the PCB 2005 of FIG. 7. The PCB 2005 may include a power module, a controller, and a communication interface. For example, the PCB 2005 may include an output interface (e.g.: buzzer).

A wire connected to the PCB 2005 may be connected to the water temperature sensor 109, the external-container temperature sensor 110, and the pickup coil 2001 via a space between the outer container 101 and the inner container 102. As the wire may contact the inner container 102 with a high temperature, the wire may be surrounded by a heat-resistant glass fiber. Also, when the wire connected to the PCB 2005 is connected via the space between the outer container 101 and the inner container 102, in order to minimize a contact with the inner container 102, an equipment guide (e.g.: a holder, etc.) protruding from the outer container 101 may be tightly fixed to the outer container 101.

The water temperature sensor 109 may be provided while passing through the inner container 102. The water temperature sensor 109 may be provided in parallel to a bottom surface while passing through the inner container 102, or may be slanted toward the bottom surface while passing through the inner container 102. The water temperature sensor 109 may contact the content (e.g.: water) in the water tank 104. The water temperature sensor 109 is provided to measure a temperature of the content, and may correspond to the first temperature sensor 2006 of FIG. 6. The external-container temperature sensor 110 is provided to measure a temperature of the outer container 101, and may be arranged at a side surface of the lower part of the inner container 102. The external-container temperature sensor 110 may correspond to the second temperature sensor 2007 of FIG. 6. The external-container temperature sensor 110 may be provided lower than the water temperature sensor 109 but is not limited thereto. According to an embodiment of the disclosure, the external-container temperature sensor 110 may be provided in plural along a perimeter direction of the inner container 102.

The pickup coil cover 112 may be provided while surrounding the pickup coil 2001. The pickup coil 2001 may be provided between the inner container 102 and the outer container 101. The pickup coil 2001 may be provided to surround the lower part of the inner container 102. The pickup coil 2001 may be provided between the external-container temperature sensor 110 and the outer container 101. The pickup coil 2001 may correspond to the communication coil 1001 of FIG. 7.

The bottom case 114 may be formed of a material with which an eddy current that rotates around an electromagnetic field generated by the wireless power transmission device 1000 is easily generated.

The silicone leg 115 may be provided at the bottom case 114. The silicone leg 115 may be a part configured to alleviate a shock applied to the cooking appliance 2000 when the cooking appliance 2000 is placed on the top plate of the wireless power transmission device 1000, and to prevent the cooking appliance 2000 from sliding.

According to an embodiment of the disclosure, the cooking appliance 2000 may wirelessly receive power from the wireless power transmission device 1000 via the pickup coil 2001 and thus may drive the communication interface included in the PCB 2005 in the handle 107. The cooking appliance 2000 may perform short-range wireless communication with the wireless power transmission device 1000 via the communication interface. For example, the cooking appliance 2000 may transmit information about an amount of received power to the wireless power transmission device 1000. For example, the cooking appliance 2000 may transmit temperature information about a temperature of the content to the wireless power transmission device 1000.

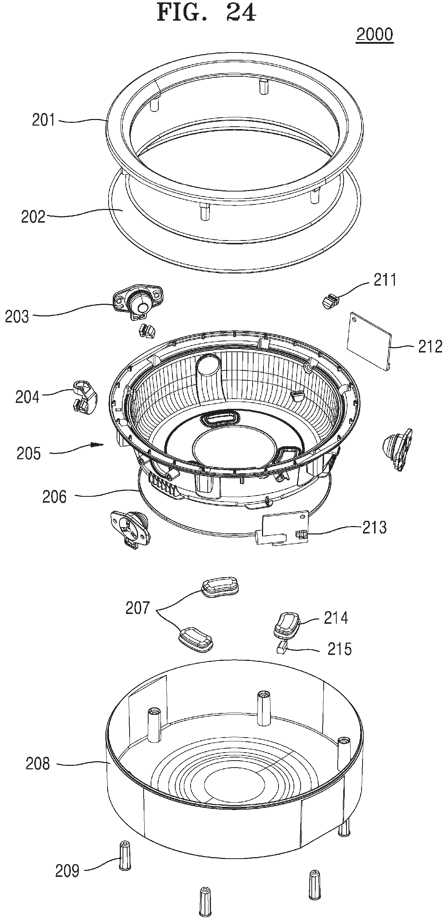

Hereinafter, a structure of a smart pot will now be described in detail with reference to FIG. 24.

FIG. 24 is a diagram illustrating the cooking appliance 2000 according to an embodiment of the disclosure. The cooking appliance 2000 of FIG. 24 may be the IH load device 2000-1. The cooking appliance 2000 according to an embodiment of the disclosure may include a top cover 201, an inner/outer sealing unit 202, a side sensor assembly module 203, a buzzer assembly module 204, an inner case 205, a pickup coil 206, a rubber leg 207, a body 208, a screw cover 209, a guide rubber unit 211, a BLE printed circuit board assembly (PBA) module 212, a power PBA module 213, a sensor leg 214, and a bottom sensor 215. However, the disclosure is not limited thereto, and the cooking appliance 2000 may further include elements necessary for implementing the smart pot.

The top cover 201 may define the exterior of the cooking appliance 2000. The top cover 201 may allow a cooking container including content to be mounted therein.

The inner/outer sealing unit 202 may be compressed when assembling the cooking appliance 2000 so as to block a moisture penetration path. The inner/outer sealing unit 202 may enhance the waterproofness of the cooking appliance 2000.

The side sensor assembly module 203 may include a side temperature sensor to measure the temperature of the cooking container, a fixing member to fix the side temperature sensor, and an elastic member (e.g., a spring) that is compressed and deformed when the cooking container is mounted. However, the disclosure is not limited thereto, and the side sensor assembly module 203 may include sensors configured to measure environment factors the cooking appliance 2000 attempts to measure. The elastic member of the side sensor assembly module 203 may be compressed and deformed as the cooking container is accommodated in the internal space of the cooking appliance 2000. For example, when the cooking container is not mounted in the cooking appliance 2000, the side sensor assembly module 203 may protrude inward, and when the cooking container is mounted in the cooking appliance 2000, the side sensor assembly module 203 may be pressed. Here, as the size of the cooking container increases, the compression ratio of the side sensor assembly module 203 increases. Accordingly, the cooking appliance 2000 according to an embodiment of the disclosure may accommodate the cooking container having various sizes.

According to an embodiment of the disclosure, the side sensor assembly module 203 including the side temperature sensor may be arranged to be spaced apart from the bottom surface of the cooking appliance 2000 by a preset height or greater. The side temperature sensor is also an electrical component, and thus may be affected by induction heating by the wireless power transmission device 1000. Accordingly, in order to minimize the influence of induction heating by the wireless power transmission device 1000 (e.g., heat generation by the side temperature sensor or noise occurrence due to induction heating) the side sensor assembly module 203 may be arranged to be spaced apart from the bottom surface of the cooking appliance 2000 by the preset height or greater. For example, in order to increase the accuracy of temperature data regarding the cooking container, the side sensor assembly module 203 including the side temperature sensor may be arranged at a height that intersects a plane surface of the cooking container rather than a curved surface of the cooking container.

According to an embodiment of the disclosure, in order to prevent eccentricity due to various sizes of the cooking container (e.g., the cooking container is mounted in an eccentric position), the side sensor assembly module 203 including the side temperature sensor may be provided in plural in the cooking appliance 2000. For example, three side sensor assembly modules 203 may be provided at intervals of 120° along an inner perimeter direction of the cooking appliance 2000.

The buzzer assembly module 204 may output a notification signal when the cooking container is overheated. The inner case 205 may support the cooking container. The inner case 205 may include the side sensor assembly module 203, the pickup coil 206, the BLE PBA module 212, and the power PBA module 213.

The pickup coil 206 may receive wireless power from the wireless power transmission device 1000. For example, the pickup coil 206 may be a coil for small power to generate power to operate the BLE PBA module 212. The pickup coil 206 may be an element that corresponds to the pickup coil 2001 of FIG. 7.

The rubber leg 207 may alleviate a shock between the cooking container and the cooking appliance 2000 when the cooking container is mounted in the cooking appliance 2000. The rubber leg 207 may prevent the cooking container from sliding.

The body 208 may form the exterior of the cooking appliance 2000 and cover the elements therein. The body 208 may prevent heat conduction to the outside during a cooking operation. According to an embodiment of the disclosure, the body 208 may include a part (i.e., a handle unit) held by a user moving the cooking appliance 2000, together with the cooking container mounted in the cooking appliance 2000.

The screw cover 209 may cover a screw. The screw cover 209 may alleviate a shock applied to the cooking appliance 2000 when the cooking appliance 2000 is placed on the wireless power transmission device 1000. The screw cover 209 may prevent the cooking appliance 2000 from sliding.

The guide rubber unit 211 may prevent the cooking container from being eccentric when the cooking container is mounted in the cooking appliance 2000. The guide rubber unit 211 may alleviate a shock applied to the cooking container. The guide rubber unit 211 may prevent the cooking container from sliding.

The BLE PBA module 212 may include a communication interface and a controller. The BLE PBA module 212 may perform wireless communication (e.g., BLE communication) with the wireless power transmission device 1000. The BLE PBA module 212 may control an output (e.g., a power level value) of the wireless power transmission device 1000. For example, the BLE PBA module 212 may include a microcontroller unit (MCU). The MCU may receive an input of temperature data of the cooking container. The MCU may store an algorithm or recipe information for automatic cooking.

The power PBA module 213 may convert power received from the pickup coil 206 into a voltage to be used by the BLE PBA module 212. For example, the power PBA module 213 may receive AC power from the pickup coil 206 and may supply DC power to the MCU or a BLE module included in the BLE PBA module 212. The power PBA module 213 may correspond to the power module 2010 of FIG. 4.

The sensor leg 214 may be one of the rubber legs 207, and may be assembled with the bottom sensor 215. As the sensor leg 214 is one of the rubber legs 207, when the cooking container is mounted in the cooking appliance 2000, the sensor leg 214 may alleviate a shock between the cooking container and the cooking appliance 2000 and prevent the cooking container from sliding.

The bottom sensor 215 may be a temperature sensor configured to detect abnormal overheating of the cooking container. The bottom sensor 215 may be arranged at a different position from that of the side sensor assembly module 203 including the side temperature sensor configured to measure a temperature of the cooking container. For example, the bottom sensor 215 may be arranged on the bottom surface of the cooking appliance 2000, and three side sensor assembly modules 203 may be arranged on a side of the cooking appliance 2000. According to an embodiment of the disclosure, when the cooking container is abnormally overheated, the temperature of the bottom surface of the cooking container increases most rapidly, and thus, by assembling the bottom sensor 215 with the sensor leg 214 that is one of the rubber legs 207, the abnormal overheating of the cooking container may be fast detected.

According to an embodiment of the disclosure, the cooking appliance 2000 may wirelessly receive power from the wireless power transmission device 1000 via the pickup coil 206 and thus, may drive the communication interface included in the BLE PBA module 212. The cooking appliance 2000 may perform short-range wireless communication with the wireless power transmission device 1000 via the communication interface. For example, the cooking appliance 2000 may transmit, to the wireless power transmission device 1000, information about an amount of the received power. For example, the cooking appliance 2000 may transmit temperature information about a temperature of content to the wireless power transmission device 1000.

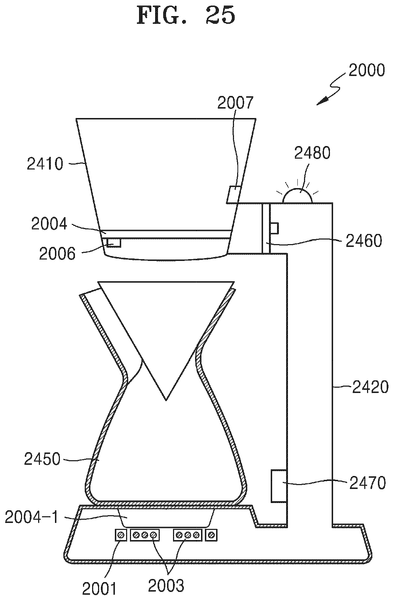

Hereinafter, a structure of a coffee dripper will now be described in detail with reference to FIG. 25.

FIG. 25 is a diagram illustrating the cooking appliance 2000 according to an embodiment of the disclosure. The cooking appliance 2000 of FIG. 25 may be the induced voltage load device 2000-2.

In an embodiment of the disclosure, the cooking appliance 2000 may include a water heater 2410 configured to heat water at its upper part, and a coffee container 2450 configured to store dripped coffee at its lower part. The water heater 2410 may include a load 2004, and a first temperature sensor 2006 and a second temperature sensor 2007 configured to measure a temperature in the water heater 2410.

In an embodiment of the disclosure, the coffee container 2450 may include the pickup coil 2001, the receiving coil 2003, and a container heater 2004-1. The coffee container 2450 may be formed of borosilicate but the disclosure is not limited thereto. The receiving coil 2003 of the coffee container 2450 may be electrically connected to the receiving coil 2003 included in the water heater 2410 via a connection unit 2420. The receiving coil 2003 and the container heater 2004-1 may be used to warm stored coffee. The receiving coil 2003 may be formed of a heat-resistant wire. The connection unit 2420 may connect the coffee container 2450 to the water heater 2410. The connection unit 2420 may include a detection sensor 2470, a solenoid valve 2460, and a light-emitting unit 2480.

The detection sensor 2470 may be configured to determine whether the coffee container 2450 is located at the upper part. The detection sensor 2470 may be a time-of-flight (ToF) sensor. The solenoid valve 2460 may discharge water by opening/closing the valve, in response to a control signal, and thus, may fill water in the water heater 2410. The solenoid valve 2460 may be a direct-acting type solenoid valve. The light-emitting unit 2480 may display an on-going operation by emitting light during an operation of the cooking appliance 2000.

According to an embodiment of the disclosure, a wireless power transmission device may include a wireless power transmitter configured to wirelessly transmit power to a cooking appliance, a communication interface configured to establish a wireless communication connection to the cooking appliance, memory storing transmission frequency information corresponding to each of a plurality of cooking appliances each including a load, and one or more processors, wherein the one or more processors is configured to control the communication interface to receive identification information related to a type of the cooking appliance, determine a limited frequency corresponding to the identification information, based on the transmission frequency information, and set an operation frequency range of first power being transmitted to the cooking appliance in a low-load state in which an operation of a main load of the cooking appliance is stopped, based on the limited frequency. The one or more processors may include a radio frequency (RF) processor, and a base band processor. The RF processor may perform a function of transmitting or receiving a signal via a wireless channel, such as band conversion and amplification of a signal. The baseband processor may execute a function of converting between a baseband signal and a bit string according to the physical layer standard of a system, for example, in the case of data transmission, the baseband processor may produce complex symbols by encoding and modulating a transmission bit string. Additionally, the one or more processors may execute various instructions of one or more programs that may be loaded into memory to perform various operations of the device and to process data. The one or more processors may be a symmetric multi-processor system containing multiple processors of the same type. The one or more processors may include a central processing unit (CPU), a microprocessor, an application specific integrated circuit (ASIC), a field programmable gate arrays (FPGAs), an application processor (AP), a digital signal processor (DSP), a communication processor (CP) together with an RF processor, and the base band processor. The processor may be a set of one or more processors or may be a multi-processor core, depending on the particular implementation. Here the set of one or more processors may include one or more microprocessor, an application specific integrated circuit (ASIC), a field programmable gate arrays (FPGAs), an application processor (AP), a digital signal processor (DSP), a communication processor (CP), one or more of an application processor (e.g. a central processing unit (CPU)), a communication processor (e.g., a modem), a graphical processing unit (GPU), a neural processing unit (NPU) (e.g., an artificial intelligence (AI) chip), a Wi-Fi chip, a Bluetooth chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, or the like. The device may perform operations based collectively on different processors of the one or more processors executing different instructions of the one or more programs. Further, the processor may be implemented using one or more heterogeneous processor systems in which a main processor is present with secondary processors on a single chip. As another illustrative example, the processor may be a symmetric multi-processor system containing multiple processors of the same type. Memory may include one or more computer-readable storage media. The computer-readable storage media are, for example, tangible and non-transitory. Memory may include high-speed random access memory and also includes non-volatile memory, such as one or more magnetic disk storage devices, flash memory devices, or other non-volatile solid-state memory devices. In some examples, one of more non-transitory computer-readable storage media of memory is used to store instructions (e.g., for performing aspects of operations described herein) for use by or in connection with the processor, which can fetch and execute the instructions. The memory may be distributed among different types of memory, with any given type being a singular or plural memory. Different memory may be used by, or associated with, a different at least one of the one or more processors.

In an embodiment of the disclosure, the transmission frequency information may include a plurality of limited frequency values that respectively correspond to power ratings of the plurality of cooking appliances and diameters of receiving coils included in the plurality of cooking appliances.

In an embodiment of the disclosure, the one or more processors may be further configured to determine the limited frequency, in further consideration of information about a cooking zone in which the cooking appliance is located from among a plurality of cooking zones.

In an embodiment of the disclosure, the one or more processors may be further configured to control the wireless power transmitter to transmit small power with the limited frequency so as to drive a communication interface of the cooking appliance.

In an embodiment of the disclosure, the one or more processors may be further configured to, when the main load of the cooking appliance is in an operating state, set a frequency of the first power to be a first threshold frequency lower than the limited frequency.

In an embodiment of the disclosure, the one or more processors may be further configured to determine, based on the identification information, whether the type of the cooking appliance is an induced voltage load device or an induction heating (IH) load device, and when the type of the cooking appliance is the induced voltage load device, set a frequency of the first power to be the limited frequency.

In an embodiment of the disclosure, the one or more processors may be further configured to, when the type of the cooking appliance is the IH load device, set a frequency of the first power to be a first threshold frequency lower than the limited frequency.

In an embodiment of the disclosure, the one or more processors may be further configured to, when the identification information is not received for a preset time, determine that the type of the cooking appliance is a general IH container, and set the frequency of the first power to be a second threshold frequency lower than the first threshold frequency.

According to an embodiment of the disclosure, a control method of a wireless power transmission device configured to wirelessly transmit power may include receiving identification information related to a type of a cooking appliance, determining a limited frequency corresponding to the identification information, based on transmission frequency information stored in memory of the wireless power transmission device, and setting an operation frequency range of first power being transmitted to the cooking appliance in a low-load state in which an operation of a main load of the cooking appliance is stopped, based on the limited frequency.

In an embodiment of the disclosure, the determining of the limited frequency may include determining the limited frequency, in further consideration of information about a cooking zone in which the cooking appliance is located from among a plurality of cooking zones.

In an embodiment of the disclosure, the control method may further include transmitting small power with the limited frequency so as to drive a communication interface of the cooking appliance.

In an embodiment of the disclosure, the control method may further include, when the main load of the cooking appliance is in an operating state, setting a frequency of the first power to be a first threshold frequency lower than the limited frequency.

In an embodiment of the disclosure, the setting of the operation frequency range of the first power may include determining, based on the identification information, whether the type of the cooking appliance is an induced voltage load device or an IH load device, and when the type of the cooking appliance is the induced voltage load device, setting a frequency of the first power to be the limited frequency.

In an embodiment of the disclosure, the setting of the operation frequency range of the first power may further include, when the type of the cooking appliance is the IH load device, setting a frequency of the first power to be a first threshold frequency lower than the limited frequency.

In an embodiment of the disclosure, the control method may further include, when the identification information is not received for a preset time, determining that the type of the cooking appliance is a general IH container, and setting the frequency of the first power to be a second threshold frequency lower than the first threshold frequency.

According to an embodiment of the disclosure, a cooking appliance may include a receiving coil configured to wirelessly receive power from a wireless power transmission device, a communication interface configured to establish a wireless communication connection to the wireless power transmission device, memory storing reception frequency information corresponding to each of a plurality of wireless power transmission devices, and at least one controller electrically connected to the communication interface and the memory, wherein the at least one controller is configured to control the communication interface to receive source identification information of the wireless power transmission device from the wireless power transmission device, determine a limited frequency corresponding to the source identification information, based on the reception frequency information, and control the communication interface to transmit the limited frequency to the wireless power transmission device.

In an embodiment of the disclosure, the reception frequency information may include a plurality of limited frequency values that respectively correspond to model names of the plurality of wireless power transmission devices or locations of one or more cooking zones included in each of the plurality of wireless power transmission devices.

In an embodiment of the disclosure, the source identification information may include at least one of a model name of the wireless power transmission device or a location of at least one cooking zone included in the wireless power transmission device.

In an embodiment of the disclosure, the limited frequency may be a frequency of first power which is received in a low-load state in which an operation of a main load of the cooking appliance is stopped.

In an embodiment of the disclosure, the at least one controller may be further configured to control the communication interface to transmit identification information related to a type of the cooking appliance to the wireless power transmission device, and the identification information may include information indicating whether the cooking appliance is an IH load device or an induced voltage load device.

A method according to an embodiment of the disclosure may be recorded on a computer-readable recording medium by being implemented in a form of program commands executed by using various computers. The computer-readable recording medium may include at least one of a program command, a data file, or a data structure. The program commands recorded in the computer-readable recording medium may be specially designed or well known to one of ordinary skill in the computer software field. Examples of the computer-readable recording medium include magnetic media such as hard disks, floppy disks, and magnetic tapes, optical media such as a compact disc-read only memory (CD-ROM) and a digital versatile disc (DVD), magneto-optical media such as floptical disks, and hardware devices specially configured to store and perform program commands, such as read-only memory (ROM), random-access memory (RAM), and flash memory. Examples of the computer command include machine codes generated by a compiler, and high-level language codes executable by a computer by using an interpreter.

Some embodiments of the disclosure may be embodied as a computer-readable recording medium, e.g., a program module to be executed in computers, which includes computer-readable instructions. The computer-readable recording medium may include any usable medium that may be accessed by computers, volatile and non-volatile medium, and detachable and non-detachable medium. Also, the computer-readable recording medium may include a computer storage medium. The computer storage medium includes all volatile and non-volatile media, and detachable and non-detachable media which are technically implemented to store information including computer-readable instructions, data structures, program modules or other data. The communication medium includes computer-readable instructions, a data structure, a program module, other data as modulation-type data signals such as carrier signals, or other transmission mechanism, and includes other information transmission media. Also, some embodiments of the disclosure may be embodied as a computer program or a computer program product, e.g., a computer program to be executed in computers, which includes computer-readable instructions.

Also, a machine-readable storage medium may be provided in the form of a non-transitory storage medium. Here, the term 'non-transitory storage medium' means that the storage medium is a tangible entity and does not include a signal (e.g., an electromagnetic wave), and the term does not distinguish that data is stored semi-permanently or temporarily on the storage medium. For example, the non-transitory storage medium may include a buffer in which data is temporarily stored.

According to an embodiment of the disclosure, a method according to various embodiments of the disclosure may be provided in a computer program product.

The computer program product may be traded between a seller and a purchaser as a commodity. The computer program product may be distributed in the form of the machine-readable storage medium (e.g., CD-ROM), or may be distributed online (e.g., downloaded or uploaded) through an application store or directly between two user devices (e.g., smart phones). For online distribution, at least a part of the computer program product (e.g., a downloadable app.) may be temporarily generated or be at least temporarily stored in a machine-readable storage medium such as a manufacturer's server, an application store's server, or memory of a relay server.

## Claims

1. A wireless power transmission device comprising:
a wireless power transmitter configured to wirelessly transmit power to a cooking appliance;
a communication interface configured to establish a wireless communication connection to the cooking appliance;
memory storing one or more programs including instructions and transmission frequency information for each of a plurality of cooking appliances comprising a load; and
one or more processors,
wherein the instructions, when executed by the one or more processors, cause the wireless power transmission device to:
control the communication interface to receive identification information related to a type of the cooking appliance,
determine a limited frequency corresponding to the identification information, based on the transmission frequency information, and
set an operation frequency range of first power being transmitted to the cooking appliance in a low-load state in which an operation of a main load of the cooking appliance is stopped, based on the limited frequency.

2. The wireless power transmission device of claim 1, wherein the transmission frequency information comprises a plurality of limited frequency values that respectively correspond to power ratings of the plurality of cooking appliances and diameters of receiving coils comprised in the plurality of cooking appliances.

3. The wireless power transmission device of claim 1, wherein the one or more programs further include instructions that, when executed by the one or more processors, cause the wireless power transmission device to:
determine the limited frequency based on information about a cooking zone in which the cooking appliance is located from among a plurality of cooking zones.

4. The wireless power transmission device of claim 1, wherein the one or more programs further include instructions that, when executed by the one or more processors, cause the wireless power transmission device to:
control the wireless power transmitter to transmit small power with the limited frequency so as to drive a communication interface of the cooking appliance.

5. The wireless power transmission device of claim 1, wherein the one or more programs further include instructions that, when executed by the one or more processors, cause the wireless power transmission device to:
when the main load of the cooking appliance is in an operating state, set a frequency of the first power to be a first threshold frequency lower than the limited frequency.

6. The wireless power transmission device of claim 1, wherein the one or more programs further include instructions that, when executed by the one or more processors, cause the wireless power transmission device to:
determine, based on the identification information, whether the type of the cooking appliance is an induced voltage load device or an induction heating (IH) load device, and
when the type of the cooking appliance is the induced voltage load device, set a frequency of the first power to be the limited frequency.

7. The wireless power transmission device of claim 6, wherein the one or more programs further include instructions that, when executed by the one or more processors, cause the wireless power transmission device to:
when the type of the cooking appliance is the IH load device, set a frequency of the first power to be a first threshold frequency lower than the limited frequency.

8. The wireless power transmission device of claim 7, wherein the one or more programs further include instructions that, when executed by the one or more processors, cause the wireless power transmission device to:
when the identification information is not received for a preset time, determine that the type of the cooking appliance is a general IH container, and
set the frequency of the first power to be a second threshold frequency lower than the first threshold frequency.

9. A control method of a wireless power transmission device configured to wirelessly transmit power, the control method comprising:
receiving identification information related to a type of a cooking appliance;
determining a limited frequency corresponding to the identification information, based on transmission frequency information stored in memory of the wireless power transmission device; and
setting an operation frequency range of first power being transmitted to the cooking appliance in a low-load state in which an operation of a main load of the cooking appliance is stopped, based on the limited frequency.

10. The control method of claim 9, wherein the determining of the limited frequency comprises determining the limited frequency based on information about a cooking zone in which the cooking appliance is located from among a plurality of cooking zones.

11. The control method of claim 9, further comprising:
transmitting small power with the limited frequency so as to drive a communication interface of the cooking appliance.

12. The control method of claim 9, further comprising:
when the main load of the cooking appliance is in an operating state, setting a frequency of the first power to be a first threshold frequency lower than the limited frequency.

13. The control method of claim 9, wherein the setting of the operation frequency range of the first power comprises:
determining, based on the identification information, whether the type of the cooking appliance is an induced voltage load device or an induction heating (IH) load device; and
when the type of the cooking appliance is the induced voltage load device, setting a frequency of the first power to be the limited frequency.

14. The control method of claim 13, wherein the setting of the operation frequency range of the first power further comprises, when the type of the cooking appliance is the IH load device, setting a frequency of the first power to be a first threshold frequency lower than the limited frequency.

15. The control method of claim 14, further comprising:
when the identification information is not received for a preset time, determining that the type of the cooking appliance is a general IH container; and
setting the frequency of the first power to be a second threshold frequency lower than the first threshold frequency.
